# EUROPÄISCHE PATENTSCHRIFT

(11) **EP 0 983 404 B1**
(45) Veröffentlichungstag und Bekanntmachung des Hinweises auf die Patenterteilung: **07.01.2004**
(21) Anmeldenummer: 98914763.2
(22) Anmeldetag: 23.04.1998
(51) Int. Cl.: E02B 15/04

(54) **VERFAHREN UND VORRICHTUNG SOWIE BAUSATZ ZUM SCHNELLEN AUSLEGEN VON SPERREN IN WASSER**
PROCESS, DEVICE AND KIT FOR RAPID DEPLOYMENT OF RETAINERS IN WATER
PROCEDE, DISPOSITIF ET JEU D'ELEMENTS POUR INSTALLER RAPIDEMENT DES BARRAGES DE RETENTION DANS L'EAU

(30) Priorität: 23.04.1997 CH 94797
(43) Veröffentlichungstag der Anmeldung: 08.03.2000
(73) Patentinhaber: Manzin, Sergio, CH-9030 Abtwil (CH)
(72) Erfinder: Manzin, Sergio, CH-9030 Abtwil (CH)
(74) Vertreter: Kulhavy, Sava, Dipl.-Ing.
(86) Internationale Anmeldenummer: PCT/CH1998/000165
(87) Internationale Veröffentlichungsnummer: WO 1998/048118

(56) Entgegenhaltungen:
- WO-A-96/13638
- DE-A- 2 157 635
- DE-A- 3 242 168
- DE-A- 3 916 026
- DE-U- 8 806 813
- GB-A- 2 053 810

## Beschreibung

### Technisches Gebiet

Die Erfindung betrifft eine Vorrichtung zum schnellen Auslegen von Schmutzstoffsperren im Wasser, nach dem Doppelkammerrohrprinzip, wobei die Doppelkammerrohre als leichte, flexible Folienschläuche ausgebildet, als tragbare Pakete bereitgehalten und für den Gebrauch in einer obenliegenden Kammer mit Luft, und in einer untenliegenden Kammer mit einem flüssigen Medium als Balast befüllbar sind. Die Erfindung betrifft ferner die Verwendung der Vorrichtung sowie einen Bausatz.

### Stand der Technik

Die Erfindung geht aus von der WO96/13638 des selben Anmelders. Diese wird als integrierender Bestandteil des vorliegenden Gesuches erklärt. Darin wird vorgeschlagen Oelunfälle auf dem Wasser mittels Verunreinigungsschutzsperren sofort einzudämmen. Durch ihre Leichtigkeit können die in Behältern in sich selbst zusammengefaltet gelagerten flexiblen Rohre sehr rasch ausgelegt, und dadurch eine weitere Ausbreitung der Oelverschmutzung verhindern. Ferner ist vorgesehen, die ausgelegten Rohre auch als Speicher für die verunreinigte Flüssigkeit zu verwenden. Im Gegensatz zu dem übrigen bekannten Stand der Technik, erlaubt die WO96/13638, die Verunreinigungsschutzsperre gleichzeitig mit der Auslegung des Doppelkammerrohres mit Luft und Wasser zu füllen, Dies geschieht dadurch, dass mit den Füllmedien selbst das im Behälter zusammengefaltete Rohr am Hinterteil des Behälters beginnend, sukzessive ausgestossen und der Behälter vorzugsweise gleichzeitig in die Gegenrichtung gezogen wird. Das Konzept kann auch als Verlegung einer Oelschutzsperre aus der Konservenbüchse bezeichnet. werden. Versuche mit zwischenzeitlich hergestellten Prototypen haben die Funktion der entsprechenden Verlegung eines flexiblen Rohres vollumfänglich bestätigt.

### Darstellung der Erfindung

Der Erfinder hatte sich nun die Aufgabe gestellt, Lösungen zu suchen, wie eine Sperre auf dem Wasser, auch bei mittel- und grosserflächigen Unfällen möglichst in beliebiger angepasster Strategie wirksam und sehr schnell eingesetzt werden kann, insbesondere auch mit dem Ziel, optimale Voraussetzungen für eine oekologische Beseitigung der Verschmutzung zu schaffen, und die weitere Ausbreitung von schwimmfähiger Verschmutzung mit je angepasster Strategie zu stoppen.

Die erfindungsgemässe Vorrichtung ist dadurch gekennzeichnet, dass die Folienschläuche als Pakete in der Form von Modulen, mit je endseitigen, formstabilen Kupplungsflanschen für die Errichtung einer längeren Sperre die Doppelkammerrohre von mehreren Modulen über Schnellkupplungen verbindbar, und mit den beiden Medien während oder nach dem Auslegen befüllbar sind, wobei die Kupptungsflanschen etwa querschnittsgleich das ganze Doppelkammerrohr umfassen, und die Füllöffnung für das flüssige Medium grossquerschnittig, in Fortsetzung der entsprechenden Kammer in den Kupplungsflanschen ausgebildet ist. Für vorteilhafte Ausgestaltungen wird auf die Ansprüche 2 bis 12 verwiesen.
Die Erfinder betrifft ferner die Verwendung der Vorrichtung als Auffangsäcke für die Speicherung von Oelen, Schlämmen, aber auch Meeresfrüchte oder Fische.

Die Erfindung betrifft ferner einen Bausatz zum schnellen Auslegen von Schmutzstoffsperren im Wasser, umfassend eine oder mehrere erfindungsgemässe Vorrichtungen, welche in grosser Zahl paketartig als in sich zusammengefaltete flexible Folienschläuche bereitgehalten werden, wobei die oben liegende Kammer mit Luft und die untenliegende Kammer mit einem flüssigen Medium als Balast befüllbar ist, und ist dadurch gekennzeichnet, dass die flexiblen Doppelkammerrohre an ihren Endseiten formstabile Schnellkupplungsteile aufweisen, passend auch zu Längskupplungsboyen und Kreuzkupplungsboyen zur Errichtung von Sperren in wählbarer Konstellation und/oder zum Einfangen von flüssigen Stoffen.

Die neue Erfindung geht von dem Kernansatz aus, dass für die Errichtung der sogenannten Oelsperren in erster Linie die menschliche Kraft mit der dem Menschen eigenen, grösstmöglichen Flexibilität und Schnelligkeit eingesetzt werden soll, weshalb gleichsam von einem "Zusammensetzspiel" ausgegangen wird. Das einzelne Modul soll besonders im Falle von Binnengewässern oder Häfen leichtgewichtig sein, so dass höchstens vier Mann, bevorzugt aber maximal zwei Mann das ganze Handling durchführen können. Ein Modul soll für Binnengewässer weniger als 60 kg wiegen, so dass eine starke Person die Behälter wenigstens bis in das Wasser befördern und plazieren kann. Die bisher in der Praxis bekannten Lösungen weisen demgegenüber Gewichte von vielen Tonnen auf, die ausserhalb des Wassers nur mit motorischen Hilfsmitteln zieigerichtet bewegt werden können. Diese sind für eine längere Dauer einer Sperre konzipiert. Die neue Erfindung will dagegen eine Einheiten- bzw. Elementbauweise für den schnellstmöglichen Einsatz, wobei die einzelnen Module erfindungsgemäss durch Schnellkupplungen verbindbar sind. Das Zusammenspiel einer Vielzahl von relativ kurzen Einheiten von z.B. 30 bis 80 Metern Länge hat den grossen Vorteil, dass auf die besondere Unfallsituation hin sofort je eine spezifische Lösung und je eine spezifische Vorgehensstrategie gewählt und durchgeführt werden kann. Da die neue Erfindung als Grundkonzept "schnell und leicht" hat, eignet sie sich bei grösseren Unfällen auch in Kombination mit den bisherigen schweren Ausführungen, die als zweite Etape ausgelegt werden können. Die Effizienz der neuen Lösung wird ganz besonders durch eine grosse Anzahl vorteilhafter Ausgestaltungen unterstützt, wie in der Folge dargelegt wird. Es ist eine Erfahrungstatsache, dass ein Unfall als solcher nicht vorausberechnet werden kann. Ein Unfallerreignis kann aber, wie das bei Oelunfällen der Fall ist, in der Art der Ausbreitung in Abhängigkeit der auslaufenden Oelmenge in der räumlichen Ausdehnung abgeschätzt und eine optimale Gegenwehr dazu geplant werden. Die Erfindung erlaubt diesbezüglich einen vollkommen neuen Ansatz dahingehend, dass je nach örtlichen Verhältnissen vom leichten bis zum schwerst möglichen Unfall im voraus Dispositive erstellt werden können und was entscheidend ist, es kann das jeweils passende Material bereitgehalten werden. Je nach Örtlichkeiten kann für eine Oelwehr in einem Hafen, in einem Kanal, einer Flussmündung, an einem See- oder Meeresufer gezielt das Sperrmaterial in einer Minimalmenge bereitgehalten werden. Ein weiterer Kernpunkt liegt ferner darin, dass sowohl ein- oder mehrfache Sperren errichtet werden können. Es ist jeweils ein Sperrenkonzept wählbar, das sich auch optimal eignet für das Einfangen des verschmutzten Wassers. Wenn in der Anmeldung von Oel die Rede ist, dann soll damit in erster Linie Oel und Derivate von Oel verstanden werden. Dies soll aber nicht ausschliessen, dass auch andere, an der Wasseroberfläche schwimmende Verunreinigungen gleicherweise behandelt werden können, also besonders alle Flüssigkeiten oder Schwimmstoffe, die aus Lagern, Tanks und Leitungen unbeabsichtigt in das Wasser gelangen können, ferner aber auch feste Schwimmstoffe, sofern diese nicht mit Gewalt wie bei reissenden Flüssen zuströmen.

Eine Rohrleitung ist an sich bestimmt für eine gerade oder gekrümmte Linienführung. Wird nun der Bereich der Schnellkupplung zusätzlich als Kreuzung bzw. Weiche ausgebildet und daran seitlich abzweigende Doppelkammerrohre angeschlossen, so können auch sternförmige oder felderartige, flächige Sperren ausgelegt werden. Die beiden älteren Druckschriften GB-A-1 554 737 sowie FR-A-2 450 907 zeigen zwei "Bilderbuch- bzw. Reisbrettlösungen" des Standes der Technik. Wenn man bei grossen Oeltankern von Schiffslängen von z.Bsp. 300 m ausgeht, so ergeben sich dazu Sperrenlängen von gegen einem Kilometer. Tatsache ist, dass Oelverschmutzungen von Grosstankern auf dem offenen Meer schnell einige km Länge haben und zusammenhängend sein können, und wenigstens anfänglich nicht nur aus relativ kleinen Oelflächen auf dem Wasser bestehen. Wenn man auch davon ausgeht, dass eine Rohrlänge von 1000 m (z.B. gemäss FR-A-2 450 907) auf dem verunglückten Schiff bereit liegt, so vergehen allein schon Stunden bis ein zweites grosses Auslegeschiff vor Ort ankommt. Ist der Oelfleck dann schon grösser als die verfügbare Barrierenlänge, so ist die Sperrenwirkung fraglich. Noch problematischer ist ein Auslegungskonzept gemäss der GB-A-1 554 737, da hier von Anfang an eine Einfangschlaufe hergestellt werden muss. Die neue Lösung ist dagegen an kein besonderes Auslegungsmuster gebunden. Mittels Kreuzungen und Weichen kann eine bandweise, eine stern- oder schachbrettartige Auslegung, ferner aber auch jede beliebige zweckmässige Form, durch die Sperren hergestellt werden. Es kann ferner wenigstens ein Teil der Doppelkammerrohre für das Auffangen und Zwischenspeichern von verunreinigtem Medium eingesetzt werden. Die Auslegung der Sperre lässt sich ferner stark von der örtlichen Strömungsrichtung des Wassers bestimmen. Ein oekologisch besonders sensibler Küstenstreifen oder eine Hafenanlage kann geschützt, oder ein Oelfleck eingekreist werden. Bei extremen Sturmsituationen können Oelsperren bekanntlich nicht eingesetzt werden. Bei etwas ruhigeren Verhältnissen erlaubt die neue Lösung aber sofort die Doppelstrategie des Einkreisens wie auch des Einfangens und Zwischenspeichern in wenigstens einem Teil der Doppelkammerrohre, welche als Module ohne Probleme auch mit Helikoptern zum Unfallort gebracht werden können. Vorteilhafterweise wird bei der Errichtung der Schmutzstoffsperre am Auslegungsanfang und/oder Auslegungsende eines Doppelkammerzuges bei langen Sperren auch dazwischen jeweils mehrere Module, eine Schwimmboye angeordnet, wobei die Schwimmboye vorzugsweise als Kreuzung oder Weiche ausgebildet wird, mit entsprechenden Schnellkupplungen für das Anschliessen von weiteren Doppelkammerrohren. Über die ganze Länge der Doppelkammerrohre können zugstarke Befestigungsstellen angeordnet, derart, dass ein oder mehrere Dopppelkammerrohre quer zu ihrer Längsachse langsam gezogen und das verschmutzte Medium entweder in eine gewünschte Richtung bewegt und/oder für das schnelle und sichere Einfangen konzentriert wird. Die Schnellkupplung wird gemäss einer weiteren vorteilhaften Ausgestaltung als Einfang-Zentriereinheit ausgebildet, wobei auf der Befüllseite des Doppellkammerrohres ein Einfangtrichter angeordnet wird. Die Schwimmboyen weisen wenigstens auf zwei gegenüberliegenden Seiten zu den Doppelkammer-rohreinheiten passende Schnellkupplungsstellen mit Schnellverschlüssen auf, die verschliessbar sind.

Das Doppelkammerrohr kann auf beiden Seiten für beide Medien verschlossen werden, z.B. mit einem, die entsprechende Endseite des Behälters verschliessenden Deckel. Der Deckel kann gemäss einer bevorzugten Ausgestaltung als vorstehender Zentrierkegel, passend als Kupplungsteil für einen Einfangtrichter ausgebildet sein. Der Behälter kann aus einem äusseren zylindrischen Mantel, dessen Zugseite einen sich über die wesentliche Querschnittsfläche des Behälters erstreckenden Einfangtrichter und dessen Ausstossseite einen den Behälter verschliessenden Deckel aufweist, bestehen. Der Einfangtrichter einerseits sowie der Deckel anderseits sind als korrespondierende Kupplungsteile ausgebildet, passend zu dem entsprechenden Kupplungsteil eines vorne oder hinten anschliessbaren, weiteren Behälters. Die Doppelkammerrohre sind aus dünnem, hochfelxiblem und sehr widerstandsfähigen und besonders reissfestem Folienmaterial hergestellt. Behälter und Doppelkammerrohr erhalten auf diese Weise kombinierte Effekte. Der Behälter kann aus an sich steifem Material hergestellt sein, dient anfänglich als Verpackungsschutz und im Einsatz als Basis für die formstabilen Kupplungsteile. Das in dem Behälter zusammengefaltete, flexible Rohr bleibt auch nach der Auslegung in fester und dichter Verbindung mit Behälterteilen. Dabei ist das Doppelkammerrohr auf der Füllseite aussen mit dem Einfangtrichter verbunden, wobei von der Engstelle des Einfangtrichters ein rohrförmiger Durchlass bis in dem Bereich der Ausstossseite geführt sein kann für die Zuführung des flüssigen Mediums in die unten liegende Kammer, in den genannten Ausstossbereich. Ferner ist dem Doppelkammerrohr auf der Füllseite ein bevorzugt seitlich münder Zuführstutzen für die Luft zugeordnet, welcher in dem Behälter durch eine Verbindungsleitung ebenfalls bis in den Bereich der Ausstossseite geführt ist, für die Zuführung der Luft in die oben liegende Kammer bis in den genannten Ausstossbereich. Der Zuführstutzen kann für die Luft ein verschliessbares Ventil oder ein Rückschlagventil, und der Durchlass für das flüssige Medium einen Verschlusskörper oder ein Rückschlagventil aufweisen. Durch einen leichten Innendruck der beiden Medien in den Doppelkammerrohren erhalten die flexiblen Folienschläuche nach der fertigen Auslegung eine beachtliche Steifigkeit und können je nach Bedarf verankert werden.

Gemäss einem weiteren sehr vorteilhaften Ausgestaltungsgedanken werden an beiden Endseiten der Module Spannstellen angeordnet für den Eingriff von Schnellspannhebeln. Die Spannhebel sind bevorzugt umstellbar für einen Verschlussdeckel oder für ein nachfolgendes Modul. Ferner wird wenigstens ein Dichtring entweder in dem Bereich des Einfangtrichters oder in dem Bereich des Deckels angeordnet. Aus dem Doppelkammerrohr können auf dessen Längsseite fest oder verschieblich Befestigungsstellen als Schleppösen für Zugmittel angebracht werden, für die Querbewegungen einer ausgelegten Sperre. Gemäss einem weiteren Ausgestaltungsgedanken wird der Vorrichtung eine Seilführung oder Führungsschienen zugeordnet, für die Positionierung eines bereits im Wasser sich befindenden Modules sowie eines nachfolgenden für dessen exakte Positionierung und Schnellkupplung. Die für die Auslegung erforderliche Zugkraft kann durch ein kleines Motorboot aber auch irgend ein Wasserfahrzeug oder sogar durch einen Hubschrauber erfolgen. Um aber möglichst ohne Verzögerung das jeweils nächstfolgende Doppelkammerrohr an das bereits verlegte anzukoppeln, ist es vorteilhaft, wenn die beiden Kupplungsteile im Sinne eines Zwangsmechanismus zusammenfügbar sind. Dies wird z.Bsp. mit den genannten Führungsschienen oder einer Kupplungshilfesmechanik sichergestellt. Um eine noch grössere Gestaltungsmöglichkeit für die Auslegung der Sperre zu erhalten, weisen die als Kreuzungs- oder Weichenstellen ausgebildeten Schwimmboyen wenigstens drei, bevorzugt vier oder sechs Kupplungsanschlussstellen auf, wobei die nicht benötigten Anschlussstellen Verschlussdeckel aufweisen können. Die Schwimmboyen können innen in Sinne einer Rohrweiche verstellbare Überleitrohrstücke aufweisen.

Wie bereits erwähnt, liegt ein weiterer Kerngedanke der neuen Lösung darin, dass die einzelnen Bauteile gleichsam wie Legobausteine zu einem Ganzen zusammenfügbar sind. Es lässt sich eine Vielzahl von besonderen Einzelelementen konzipieren. Demgegenüber wird jedoch vorgeschlagen, die Anzahl Grundelemente klein zu halten, damit mit einer genügenden Anzahl Grundelemente sehr rasch ein Sperrenaufbau hergestellt werden kann. Genau wie bei Bränden zählen die ersten Minuten am meisten, weil dann der Schadenumfang noch relativ klein und jede Massnahme sehr viel wirkungsvoller ist. Als wesentliche Grundbausteine haben sich etwa die folgende ergeben: Einzelschlauchmodule, Serieschlauchmodule, Doppelschlauchmodule, Längskupplungen, Kreuzkupplungen, Verschlusskupplungen sowie Durchgangskupplungen, wobei alle erwähnten Teile je mit negativ und/oder Positiv-Kupplungsteilen auf je ein entsprechend anderes passt. Wichtig ist dabei, dass auch die kraftmässige Verbindung als Schnellverschluss immer der gleiche ist. Ein weiterer Ausgestaltungsgedanke liegt darin, dass die Kupplungsteile Kupplungshilfen aufweisen, z.Bsp. in der Form von einem Zentrierkonus, oder mehreren entsprechend konisch ausgebildeten Zusammenstossflächen oder Einführungshilfen. Wie in der eingangs erwähnten WO96/13638 ausgeführt wird, können die beiden Medien über Zwangsmittel wie Pumpen und Gebläse in die Doppelkammerrohre eingeführt werden. In vielen Fällen wird es aber vorteilhafter sein, das flüssige Medium, meistens Wasser oder bereits verschmutztes Wasser, durch eine einfache Schleppwirkung in das Oelkammerrohr einströmen zu lassen. Die Wassereinführung kann dabei ohne weitere technische Hilfsmittel erfolgen, so dass von dem Personal nur das Einblasen der Luft sichergestellt und kontrolliert werden muss. Die einzelnen konstruktiven Ausgestaltungen können nicht nur an dem jeweils gezeigten Objekt, sondern auch bei allen übrigen verwendet werden.

Ein weiterer grosser Vorteil der neuen Lösung liegt darin, dass beliebig viele Doppelkammerrohre zum Zwischenspeichern von verunreinigtem flüssigem Medium einsetzbar sind. Da auch hier mit dem gleichen "Legospiel" vorgegangen werden kann, lässt sich sehr schnell eine beliebig grosse Flüssigkeitsmenge zwischenspeichern. Die mit verschmutztem Medium gefüllten Doppelkammerschtäuche können wenn dies erforderlich ist an eine entferntere Stelle gezogen und von dort getrennt und abgeführt und einer Reinigung zugeführt werden. Die neue Lösung dient deshalb gleicherweise z.Bsp. dem Schutz einer Hafenanlage einer Uferzone, insbesondere bei Wasserfassungen, dem Einsperren einer Oelfläche oder aber dem Einfangen und Entfernen von ausgelaufenem Oel oder anderen schwimmfähigem Material. In besonderen Fällen kann ein oder mehrere Module auch unabhängig einer Sperre als blossen Zwischenspeicher verwendert werden, wobei sie dann als schwimmende Zwischenspeicher eingesetzt werden.

Die neue Erfindung baut auf dem zentralen Gedanken der WO96/13638 auf, wonach der hochflexible Folienschlauch handorgelmässig in sich selbst zusammengelegt gelagert wird. Der flexible Schlauch erhält erst nach der Auslegung und Füllung die von einer Sperre geforderte Steifigkeit. Die neue Lösung kombiniert die hohe Flexibilität der Folie mit formstabilen Kupplungsflanschen an den jeweiligen Schlauchenden. Das eigentlich ungewohnte sind nicht bloss die genannten Gegensätze, sondern auch die ungewohnten Abmessungen, die in der Praxis meistens über 40 cm bis zu 1,2 Meter im Durchmesser betragen. Sind einmal zwei Kupplungsflanschen verbunden, so bilden diese zusammen eine noch grössere Formstabilität. Der flexible Schlauch behält auch in gefülltem Zustand eine genügende Nachgiebigkeit, so dass er kleinen, örtlichen Wasserbewegungen etwas folgen kann. Die in Bezug auf das Wasser starren Kupplungsflanschen behindern wegen ihren geringen Abmessungen in Achsrichtung der Doppelkammerrohre diese örtlichen Bewegungen nicht. Das Kuppeln von zwei Flanschen erfolgt bevorzugt vor der Füllung, so dass dank der Flexibilität der Schlauchfolien die beiden nur wenige Kilo schweren Kupplungsteile auch von Hand aufeinander gepasst und zusammen gesichert werden können.

### Kurze Beschreibung der Erfindung

Die Erfindung wird nun an Hand von einigen Ausführungsbeispielen mit weiteren Einzelheiten erläutert. Es zeigen:

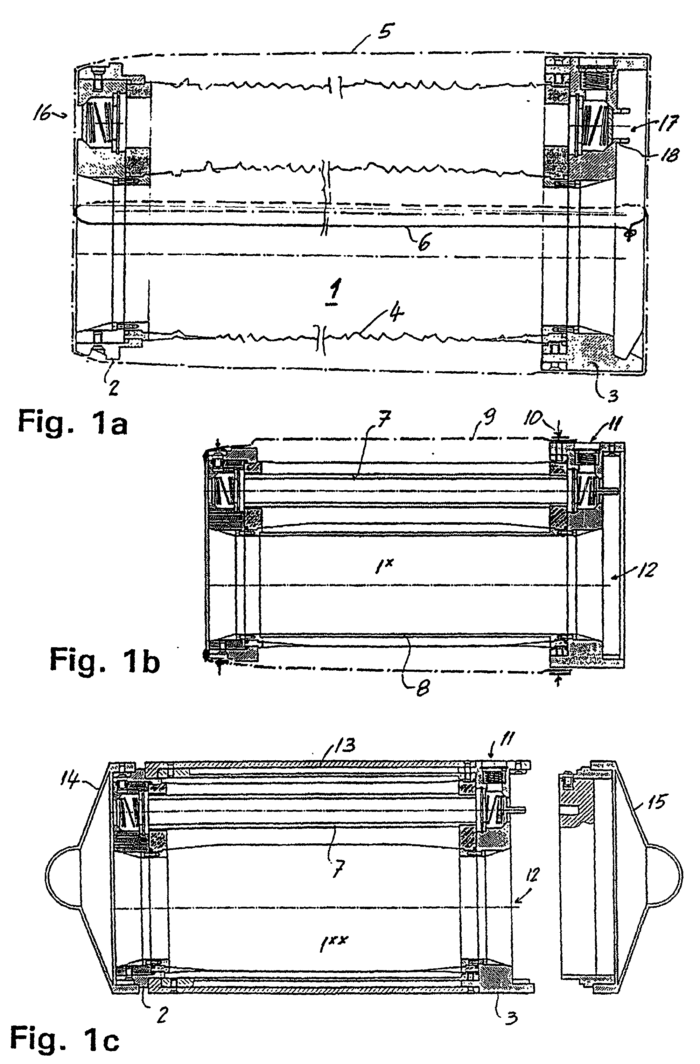

- die Figur 1a: die Funktionskernteile von einem Lager-Modul als flexibler Folienschlauch mit beidseitigen formstabilen Kupplungsflanschen;
- die Figur 1 b: die Lösung gemäss Figur 1 a mit je einem Führungsrohr für das gasförmige sowie das flüssige Medium;
- die Figur 1c: ein Modul wie Figur 1 b, jedoch mit einem äusseren Schutzmanteil in der Art eines Behälters;
- die Figur 2: zeigt die Figur 1 c im grösseren Massstab;
- die Figur 3: zeigt der Figur 1 c bzw. 2 in einer Explosionsdarstellung;
- die Figur 4a: sowie 4b die mechanischen Teile der Kupplungsflanschen in grösserem Massstab;
- die Figur 5a: ein Modul in einer Lagerform, wobei die Figur 5b ein Ende beim Auslegen und die Figur 5c einen Schnitt V - V der Figur 5a darstellt;
- die Figur 6a: die Kupplung von zwei Modulen vor dem Auslegen;
- die Figur 6b: einen Schnitt VI - VI der Figur 6a;
- die Figur 7: einen Teilschnitt durch eine andere Bauform eines Modules beim Andocken an ein zweites;
- die Figur 8: drei Situationen bei fortschreitender Auslegung einer Einfangsperre gemäss Figur 7;
- die Figur 9a: einen Schnitt IXa der Figur 9c für eine Kreuzungsboye;
- die Figur 9b: einen Schnitt IXb der Figur 9a;
- die Figur 9c: eine Ansicht IX der Figur 9a;
- die Figuren 10a bis 10d: verschiedene Anschlussmöglichkeiten einer Kreuzungsboye;
- die Figuren 11a bis 11c: verschiedene Varianten für die Auslegung eines Sperrenzuges mit und ohne Boye;
- die Figur 12: eine Oelwehr in einem Kanal bzw. Fliessgewässer mit Oelabschöpfung;
- die Figuren 13a, 13b und 13c: drei Phasen von dem Auslegen einer Oelsperre um ein leckes Oelschiff mit einer Abfüllung des ausgelaufenen Oeles in Doppelkammerrohre in einem offenen Gewässer;
- die Figur 14a und 14b: ein Sperrenkonzept bei einer Kanal- und Mündungszone resp. eines Hafens oder einer besonders wertvollen Uferzone;
- die Figuren 14c und 14d: zeigen zwei Schemen für das Einfangen des Oelflecks bei sternförmiger Anordnung von Aufnahme-Doppetkammerrohren;
- die Figuren 15a bis 15d: schematisch einige Auslegungsdispositionen;
- die Figuren 16a und 16b: zeigen zwei alternative Einsätze mit und ohne Verschluss am Ende;
- die Figur 17: zeigt verschiedene Möglichkeiten der Doppelkammerausgestaltung.

### Wege und Ausführung der Erfindung

Die Figuren 1 a, 1 b sowie 1 c zeigen drei verschiedene Varianten von je einem Modul. Die Figur 1 a zeigt die Kernfunktionsteile eines Schlauchmodules nämlich:
- zwei formstabile Kupplungsflanschen 2 und 3 sowie
- ein in sich selbst zusammengefalteter flexibler Folienschlauch 4.

Das ganze Modul ist eingehüllt mit einer Schutzfolie z.B. einer Schrumpffolie 5 oder ein Sack, welche als Lager- und Transportschutz gegen mechanische Beschädigung sowie gegen Witterungseinflüsse bestimmt ist, und vor dem Einsatz entfernt werden muss. Als weitere Transport- und Lagersicherung kann ein starkes Band 6 direkt um das Modul gespannt werden, damit die mit einiger Presskraft eingefaltete Folie zusammen bleibt. Die Figur 1b geht von den selben Grundkomponenten aus, weist jedoch zusätzlich ein kleinquerschnittiges Leitrohr 7 für das gasförmige Medium sowie ein grossquerschnittiges Leitrohr 8 für das flüssige Medium auf. Das Modul 1^{x} gemäss Figur 1b kann mit einem stärkeren Schutzmantel 9 umgeben werden. Der Schutzmantel 9 kann z.B. auch eine dickwandige Schrumpffolie sein, die auf einer Seite mit einer Zugband 10 gehalten ist. Vor dem Auslegen der Sperre braucht lediglich das Zugband 10 gelöst, über den Luftanschluss 11 das gasförmige Medium und über die Wassereintrittsöffnung 12 das flüssige Medium eingebracht zu werden. Die Figur 1 c zeigt ein robustes Modul 1^{xx} mit einem Gehäuse 13 sowie je einem Verschlussdeckel 14 resp. 15 auf den beiden Endseiten des Modules, wobei beim Modul 1^{xx} der Verschlussdeckel 15 abgehoben dargestellt ist.

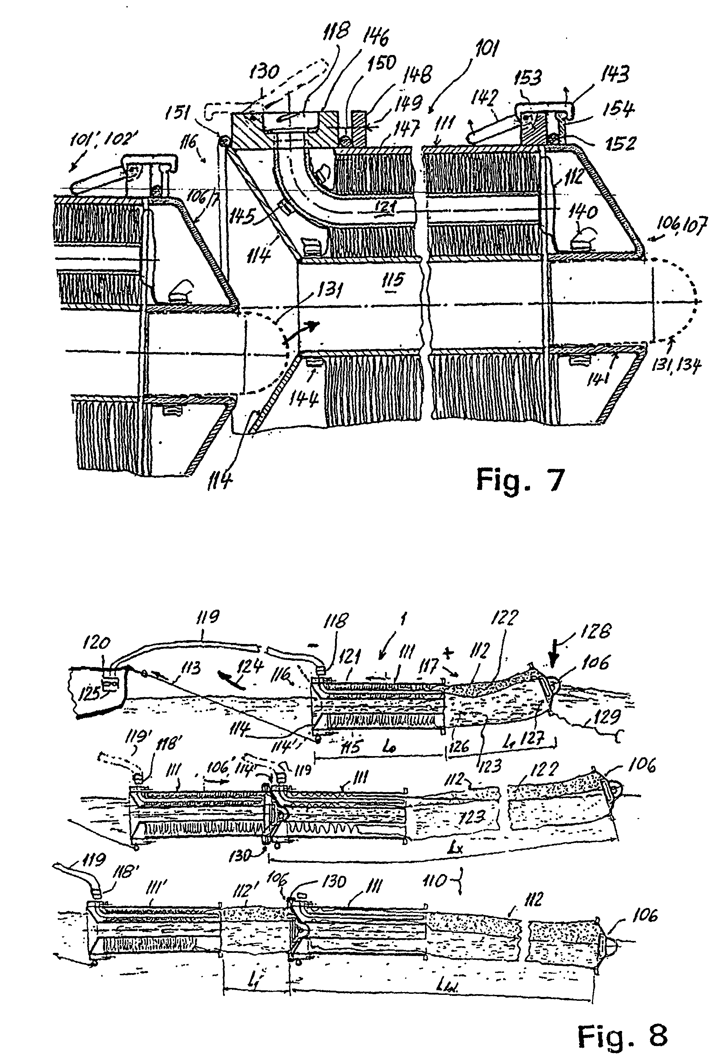

Die drei dargestelten Varianten ergeben sehr interessante Einsatzmöglichkeiten, auch in Abhängigkeit des besonderen Einsatzfalles. Die Lösung gemäss Figur 1a erlaubt, mit den kleinstmögliche Grundkosten eine grosse Menge an Modulen bereitzuhalten und diese in kürzestmöglicher Zeit in grosser Länge auszulegen. Die Lösung gemäss Figur 1a lässt es zu, dass der in sich selbst zusammengefaltete Folienschlauch als Doppelschlauch wie eine Handorgel je nach vorgesehener Länge auf z.B. 30, 50 oder 100 meter Länge auf dem Wasser ausgezogen wird, wobei gleichzeitig mit der Luftfüllung begonnen werden kann. Die Sperre kann danach durch beliebige weitere Module verlängert werden. Die Sperrenaustegung kann ohne Unterbrechung der Luftfüllung erfolgen. wenn in den beiden Kupplungsflanschen 2 und 3 je ein Ventil 16 resp. 17 angeornde: ist und diese beim Anflanschen des jeweils nachfolgenden z.B. durch eine Nase 18 zwangsweise geöffnet wird. Das Zusammenkuppeln lässt sich bei dieser Variante mit geringer Kraft durchführen, da das Folienmaterial in nicht gefülltem Zustand wie ein Stück Tuch der Bewegung des Kupplungsflansches folgt und dieser in den nächsten Kupplungsflansch von Hand einlegbar und zusammenspannbar ist (z.B. gemäss Figur 7). Die Lösung gemäss Figur 1c besitzt nur ein Führungsrohr für das gasförmige Medium und eignet sich z.B. für das Füllen durch Schleppen. Das Ausstossende bleibt mit dem Verschlussdeckel 14 verschlossen. Beim Beginn der Auslegung wird lediglich der Verschlussdeckel 15 weggenommen, so dass das Wasser über die Füllöffnung 12 eindringen kann. Das Gehäuse 13 schützt den Folienschlauch 4 auch während einer langen Lagerdauer und kann dort Vorteile bieten, wo einige Module mit den selben Folienschläuchen mehrmals z.B. für Übungszwecke gebraucht werden.

Die Lösung gemäss Figur 1a gestattet als einzige von den drei Beispielen anstelle dem bevorzugten in sich selbst zusammenfalten gemäss der Eingangs zitierten WO 96/13638 ein wendalförmiges Falten etwa gemäss der FR-A-1 121 333, wie dies bei der Faltung von Textilgeweben bekannt ist.

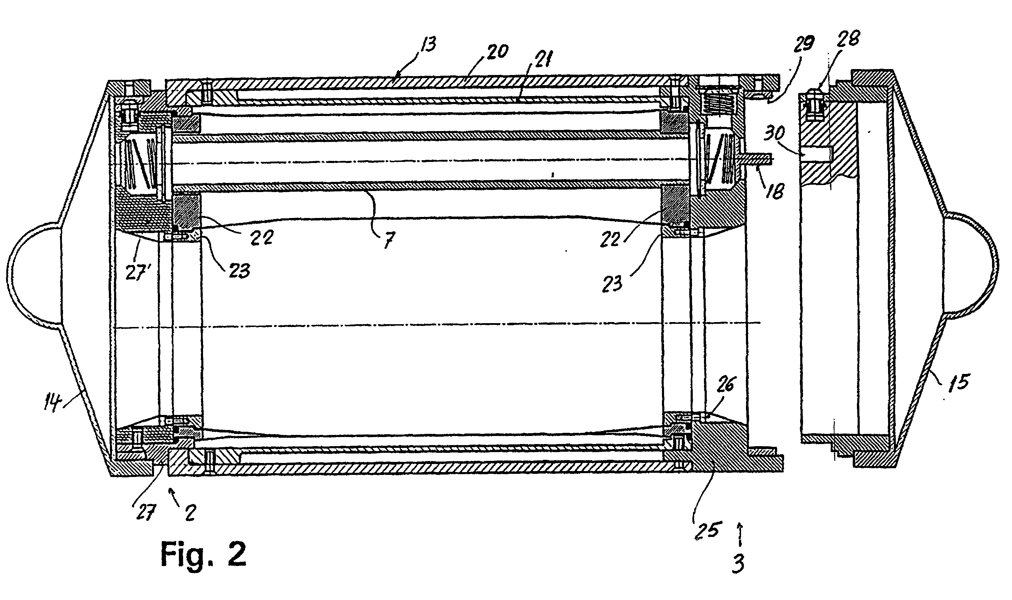

Die Figur 2 zeigt die Lösung der Figur 1 c in grösserem Masstab. Der Behälter 13 weist eine Doppelwandung 20, 21 auf. Mit der Doppelwandung kann Gewicht gespart und die Schwimmfähigkeit des Modules auch bei längerem Verbleib im Wasser sichergestellt werden. Beide Kupplungsflanschen 2 und 3 sind mehrteilig ausgebildet. Dies vereinfacht vor allem die Montage bzw. das Einlegen und Falten des Folienschlauches 4. Der Folienschlauch 4 wird durch je zwei innere Dichtringe 22, 23 in einer entsprechenden Ausnehmung 24 eines Flanschringes 25 mittels Schrauben 26 resp. 27, 27' dicht und kräftig mit dem jeweiligen Kupplungsflansch gehalten. Die Verschlussdeckel können schlossriegelartig über mehrere Bolzen 28 sowie einen dazu passenden Drehring gesichert werden. Das selbe System dient gleichzeitig auch für sichere Verriegelung zweier Kupplungsflanschen bei der Verbindung von Modulen. Eine Ausnehmung 30 sorgt dafür, dass der Verschlussdeckel 15 die Ventilnase 18 nicht betätigt.

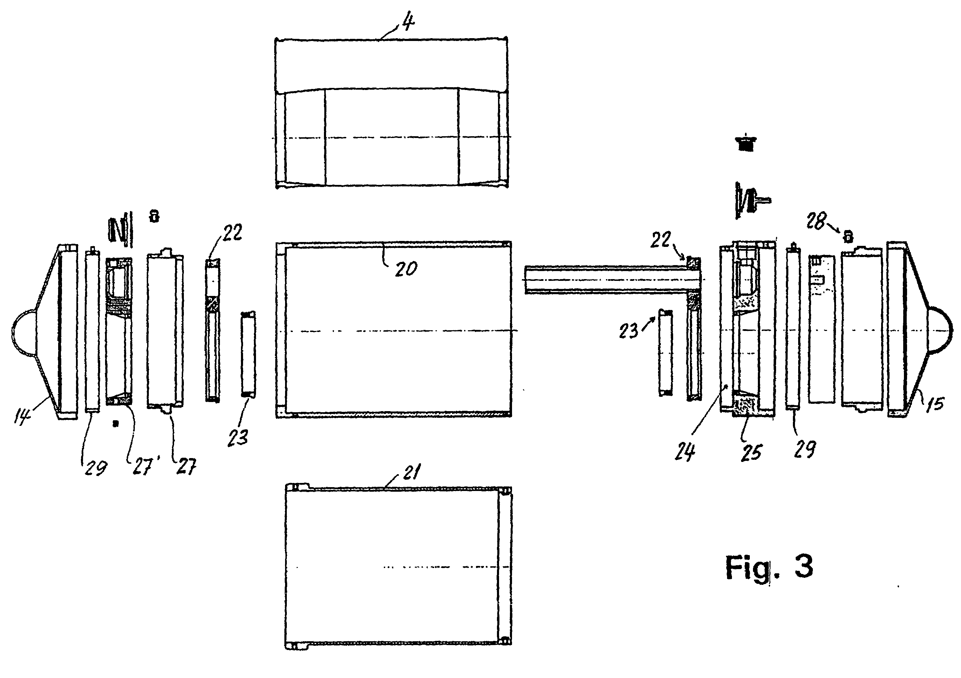

Die Figur 3 zeigt eine sogenannte Explosionsdarstellung aller Teile der Figur 2.

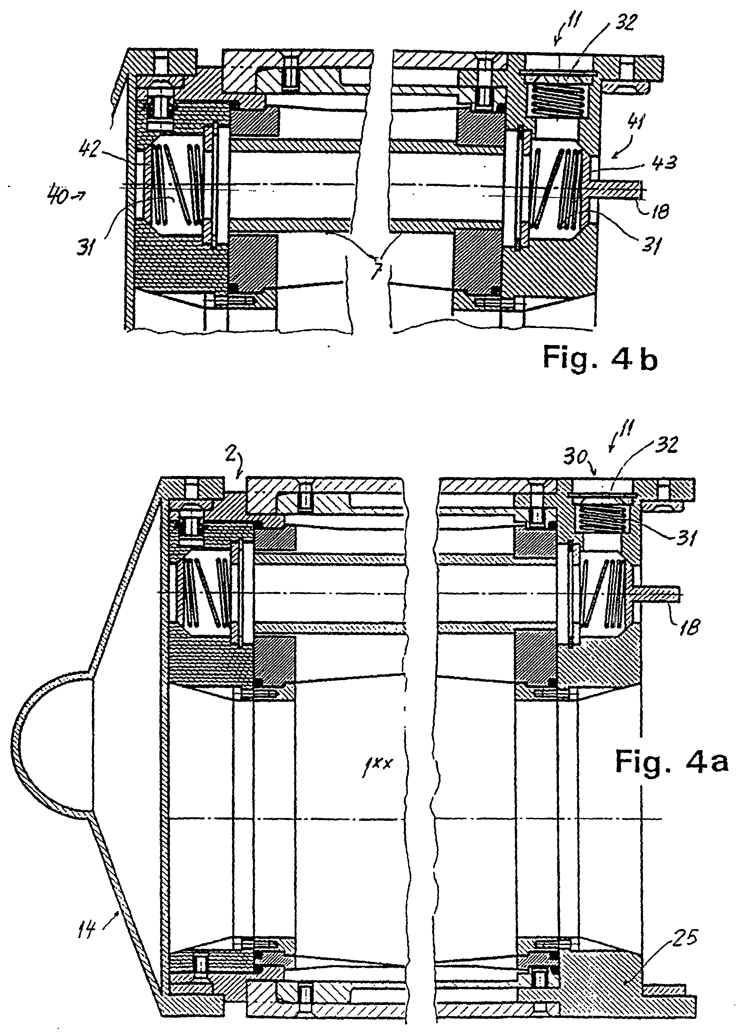

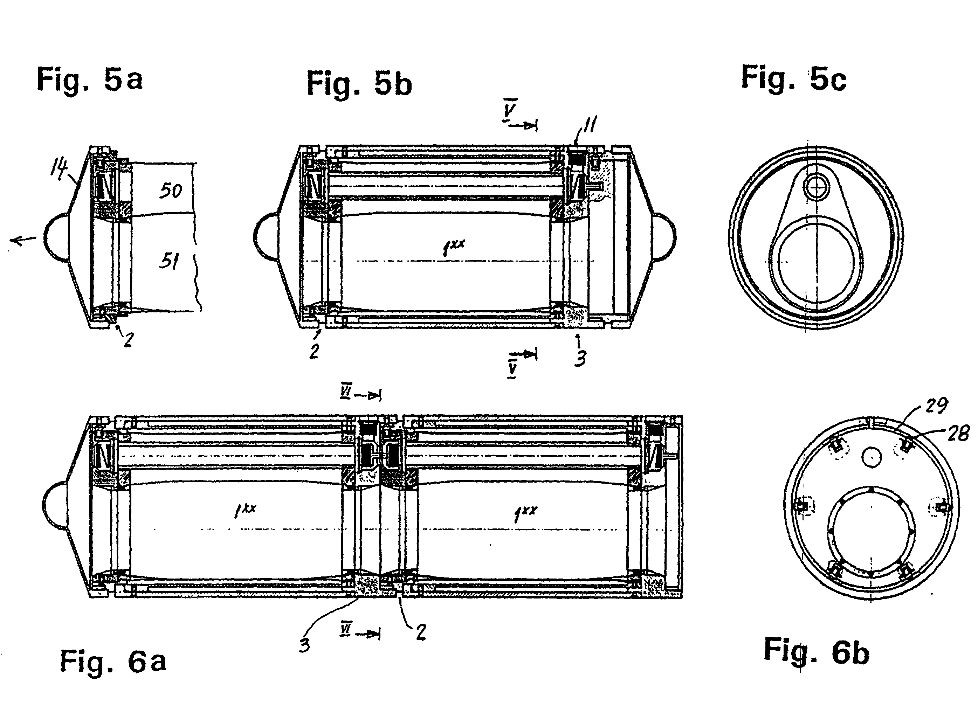

Die Figuren 4a und 4b zeigen Ausschnitte aus der Figur 2 in grösserem Massstab, wobei die Ventilsituation hervorgehoben ist. Beim Luftanschluss 11 ist ein Rückschlagventil 30, bestehend aus einer Druckfeder 31 sowie einem Ventilteller 32. Wird Druckluft eingeblasen, so wird der Ventilteller 32 gegen die Feder gedrückt und der Luftweg freigemacht. Beim Abschalten der Druckluftzufuhr tendiert die Luft auf dem umgekehrten Weg wieder abzuströmen, was durch den Ventilteller 32 sowie die Druckfeder verhindert wird. Nach Füllung der oben liegenden Kammer bleibt die Luft eingesperrt. Das Rückschlagventil 30 ist radial angeordnet und wird auf diese Weise durch das Kuppeln der Module auf keine Weise behindert. Das Radialventil 30 muss nur bei einem Kupplungsflansch, bei dem Beispiel bei dem Flanschring 25 vorgesehen werden. Anders liegen die Verhältnisse bei den achsial angeordneten Ventilen 40 und 41, welche ebenfalls als Rückschlagventile ausgebildet sind. Besteht ein Luftdruck in der oben liegenden Kammer für Luft, so bleiben die beiden Ventile 40, 41 auch durch die Wirkung je einer Druckfeder 31 über den Ventilteller 42 resp. 43 geschlossen. Der Ventilteller 43 weist zusätzlich eine Ventilnase 18 auf. Werden nun zwei Module über die Kupplungsflanschen 2 resp. 3 fest verbunden, drückt die Ventilnase 18 des einen Kupplungsflansches den Ventilteller 42 des anderen Kupplungsflansches ein (Figur 6a), so dass die beiden oben liegenden Kammern über die nunmehr geöffneten Ventile 40, 41 für einen Luftausgleich verbunden sind. Auf diese Weise weisen alle in einem Zug zusammengeschlossenen Module den selben Luftdruck, bzw. die selbe Füllung auf.

Die Figur 5b zeigt den Beginn des Ausstossens von einem Ende mit dem Kupplungsflansch 2 sowie dem Veschlussdeckel 14. Die Koordination der Befüllung mit den beiden Medien kann von Fall zu Fall gewählt werden, sowohl in zeitlicher Hinsicht wie in Bezug auf die jeweils momentane Füllleistung. In der Figur 5b ist nur angedeutet, dass sowohl die oben liegende Kammer 50 mit Luft wie die unten liegende Kammer 51 mit Wasser gefüllt und der Schlauch gestreckt ist.

Die Figur 6a zeigt zwei Module die über den jeweils passenden Kupplungsflansch 2 resp. 3 gekuppelt und über Bolzen 28 und Drehring 29 verriegelt sind, wie aus der Figur 6b auch ersichtlich ist.

Die Figur 7 zeigt eine andere Bauform einer Schlauchdose in grösserem Massstab. Das Doppelkammerrohr 112 ist vollständig auf sich selbst zusammengefaltet in den Lagerbehälter 111. Dabei ist das ausstossseitge Ende bzw. der Sackboden 127 für beide Kammern über eine Briede 140 mit einem Anschlussstutzen 141 der Verschlusskupplung 106 bzw. Durchgangskupplung 107 befestigt und gleichzeitig dicht verschlossen. Beim Hochziehen eines Handgriffes 142 wird eine Spannklammer 143 gelöst, so dass der Ausstoss des Doppelkammerrohres 112 beginnen kann. Auf der Zugseite 116 sind die beiden offenen Enden des Doppelkammerrohres 112. Diese sind je über eine Briede 144 resp. 145 fest und dicht mit der vorderen Seite des Lagerbehälters 111 verbunden. Der Lagerbehälter 111 weist vorne einen massiven Flansch 146 auf, an dem sowohl die Spannklammer 130, der Füllstutzen 118 wie auch Halteösen angebracht sind. Mit dem Flansch 146 ist der Füllkonus 114 mit dem Führungs- oder Durchleitrohr 115 ferner das Luftrohr 121 fest verbunden. In der gezeigten Ausführung ist der rohrförmige Mantel 147 des Lagerbehälters 111 über einen Flansch 148 sowie Schrauben 149 zusammengeschraubt. Diese Schraubverbindung erlaubt ein einfacheres Einlegen des in sich selbst zusammengefalteten Doppelkammerrohres. Dieses kann so auf verschiedene Weise eingelegt werden. Bei der Verschraubung von Flansch 146 und 148 wird ein Dichtring 150 eingeklemmt, so dass Flansch 146 und Mantel 147 luft- bzw. wasserdicht verbunden sind. Sinngemäss ist auch ein Dichtring 151 auf der Zugseite und ein Dichtring 152 auf der Ausstossseite vorgesehen, so dass unbeabsichtigt an keiner der drei Stellen Medium ein- oder austreten kann. Auf der Ausstossseite wird die kraftmässige Verbindung zwischen einem Flansch 153, der Teil des Mantels 147 ist, sowie einem Flansch 154, der Teil der Verschlusskupplung 116 resp. Durchgangskupplung 117 ist, hergestellt. In der Figur 7 ist die Zentriernase 131 strichliert dargestellt. Die entsprechende Nase kann eingesetzt oder entfernt werden, entsprechend entsteht entweder eine Einzelschlauchdose 101 oder eine Serieschlauchdose entsprechend Figur 6a. Die Figur 7 zeigt eine Situation, bei der eine zweite Schlauchdose 101', 102' gerade im Begriffe ist, an die erste anzudocken. Die Zentriernase 131 stösst anfänglich auf den Füllkonus 114 auf und wird sofort in eine zentrale Lage gelenkt, bei welcher die beiden Schlauchdosen über die Schnellspannmittel 130 kraftmässig verbunden bzw. gekuppelt werden können.

In der Figur 8 Mitte ist der Übergang von einer ersten Phase der Auslegung in eine zweite dargestellt. Das Doppelkammerrohr 112 ist beinahe vollständig ausgelegt und ein zweiter Lagerbehälter 111' ist bereits angedockt bzw. mit dem ersten über die Kupplungsstücke verbunden. In der Figur 8 oben weist das Ausstossende, also der Sackboden 127, eine Verschlusskupplung 106 auf. Die Verschiusskupplung 106 hatte zuvor noch eine Verschliessfunktion für den Lagerbehälter 111, insbesondere auch als Schutz der Kunststofffolie in dem Lagerbehälter, welche das Doppelkammerrohr bildet. Nach Beginn des Ausstosses dient das Verschlusskupplungsstück als Befestigung für eine Verankerung. Der zweite und jeder folgende Lagerbehälter weist auf der selben Seite eine identische Verschlusskupplung 106 als Positivteil auf, das nun genau zu dem Negativteil des vorangestellten Behälters passt. Der Lagerbehälter 111' wird an den Lagerbehälter 111 gekoppelt. Die Verschlusskupplung 106', die in der mittleren Figur 1 noch über eine Schnellspannklammer 130 mit dem Lagerbehälter 111' angeschlossen war, wird über Schnellspannklammern 130 (welche die selben sein können) an das Füllende 116 des ersten Behälters 111 angekoppelt und bildet sofort Verankerung und Dichtschluss des zweiten Doppelkammerrohres 112' mit dem ersten Doppelkammerrohr 112 (Figur 1 unten). Glechzeitig mit dem Wechsel des Ausstosses des ersten Doppelkammerrohres 112 zu dem zweiten 112' usw. muss bei der gezeigten Ausführung auch der Verbindungsschlauch 119 von dem ersten Füllstutzen 118 auf dem zweiten Füllstutzen 118' gewechselt werden, damit in der Folge Luft in das zweite Doppelkammerrohr 112' eingeblasen wird. Der ganze Kupplungsvorgang zwischen zwei Elementen sowie das Wechseln des Verbindungsschlauches kann unter normalen Verhältnissen innert Sekunden erfolgen. Für erschwerte Bedingungen, nachts und bei leichtem Sturm können zusätzliche Kupplungshilfen z.Bsp. durch schienenartige Führungen eingesetzt werden. Denkbar ist, dass dabei der je erste Behälter bzw. Container zurück auf Führungsschienen näher an das Motorboot gezogen und der je nächstfolgende Behälter auf den selben Führungsschienen dem ersten Behälter hinzugestossen wird. Wie es bei Rohrkupplungen eine Vielzahl von Lösungsmöglichkeiten gibt, so können auch bei den Einfangsperren verschiedenste Verbindungsmittel gewählt werden, wie etwa Bajonetverschluss, Magnetverschlüsse usw. Da es sich jedoch um das Verbinden von grösseren Körpern von 0,4 m bis weit mehr als 1 Meter Durchmesser handelt, wird die gezeigte Lösung eher bevorzugt.

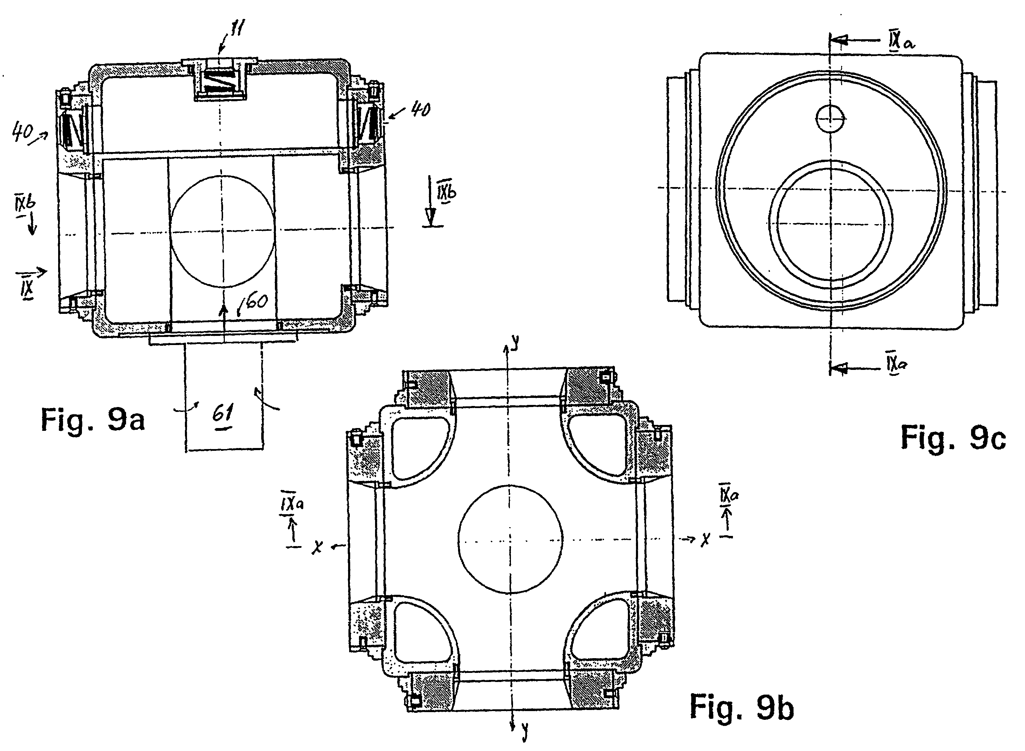

Die Figuren 9a bis 9c zeigen eine Boye, die einerseits eine analoge Funktion wie ein Schlauchmodul mit den Folienschläuchen hat. So kann über die Boye sowohl das gasförmige Medium wie das flüssige Medium zugeführt werden. Die Boye in der gezeigten Ausführung unterbricht allerdings die Luftströmung. Sie stellt in jeder Richtung Ende oder Anfang für die Luftströmung dar, je nach Betrachtung. Die Boye hat aber zwei weitere wichtige Funktionen. Durch eine Bodenöffnung 60 kann Wasser als das flüssige Medium über eine Tauchpumpe 61 in die untenliegende Kammer eingebracht werden. Die andere wichtige Funktion liegt in der Möglichkeit der Kreuzung. Mit den bisher beschriebenen Modulen können nur in einer Achsrichtung z.B. der X-X-Achse beliebige Länge zusammengebaut werden. Die Boye gestattet nun auch quer dazu, also in der Y-Y-Achse Module bzw. Sperren zu verlegen. Für die Auslegestrategie wird damit eine völlig neue Dimension eröffnet. In Bezug auf die Kupplungsanschlüsse ist die Boye identisch ausgebildet wie die entsprechenden Enden der Schlauchmodule. Die Boye ist so konzipiert, dass sie mit optimaler Eintauchtiefe schwimmt. Wichtig für die Sperrenfunktion ist, dass auch in dem Bereich der Boye die Sperre etwa gleich tief in das Wasser hinein und über den Wasserspiegel ragt. Ein weiterer Zweck der Boye ist das Verankern der betreffenden Stelle. Die jeweils nicht benötigten Öffnungen für das flüssige Medium werden durch Verschlussdeckel verschlossen. Mit den Boyen können auch zur Trennung eine bestimmte Anzahl Schlauchmodule benutzt werden. Z.B. kann bei sehr grossen Sperrenlängen jeweils nach 10 Schlauchmodulen eine Boye gesetzt werden.

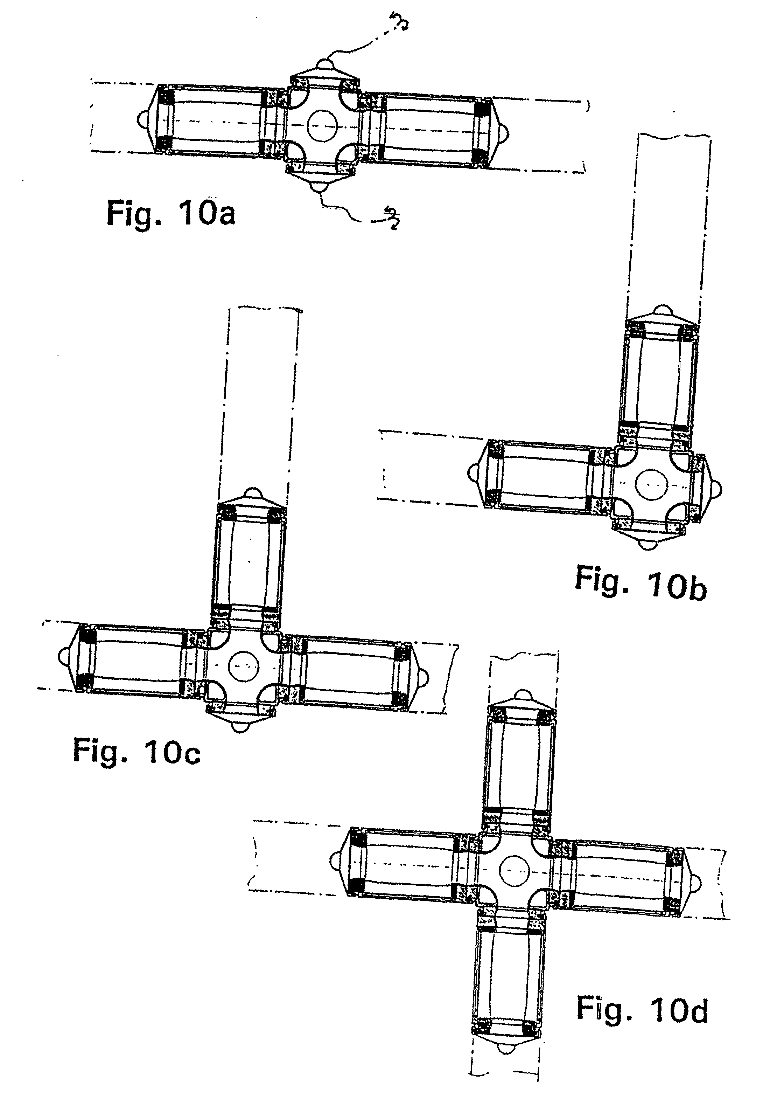

Die Figuren 10a bis 10d zeigen vier wichtige Beispiele für den Anschluss von Schlauchmodulen in einer Achse (Figur 10a), im Winkel-T-oder Kreuzform.

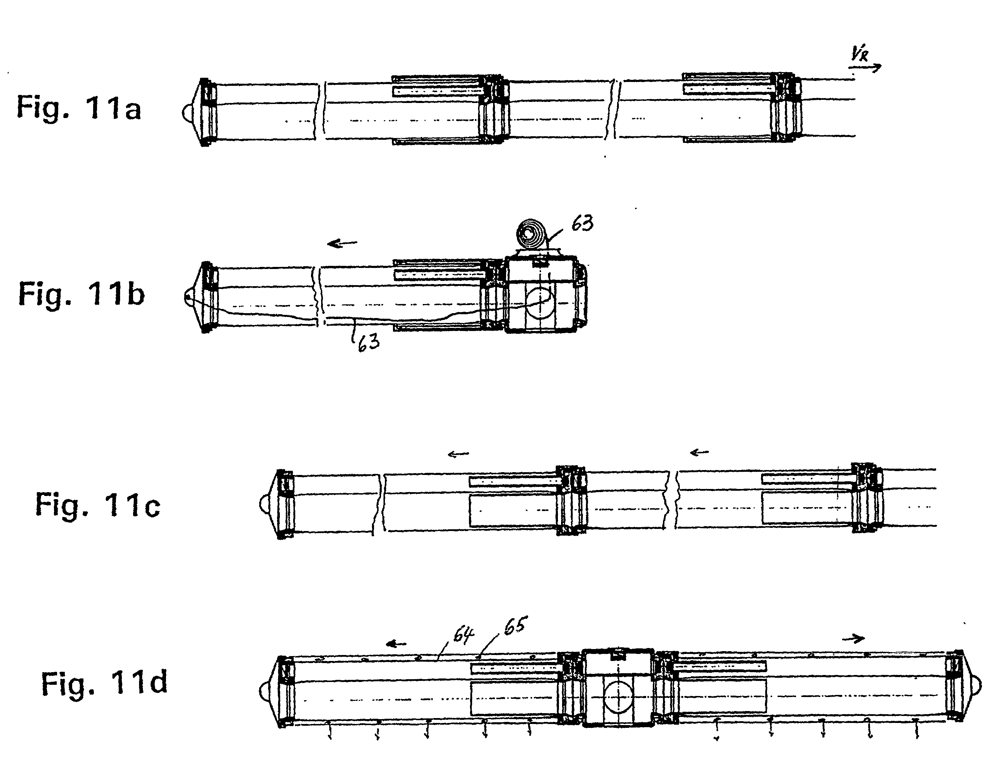

Die Figur 11a zeigt das blosse Aneinanderreihen von Schlauchmodulen, wobei VR die Richtung der bevorzugten Auslegung von einer Boye aus in die beiden entgegegesetzten Richtungen. Bei der Figur 11 c dient die Boye als Ausgangspunkt oder Endpunkt für die Auslegung. Dabei dient die Boye auch als Ankerstelle. In der Figur 11 b ist eine weitere Möglichkeit des Einbringens eines zugstarken Seiles 63, das gleichzeitig mit dem Auslegen des Doppelschlauches im Inneren mitgeführt wird. Das kann bei Strömungen des Wassers von grosser Wichtigkeit sein, damit nicht die ganze Kraft des strömenden Wassers von der Folie abgefangen werden muss. Sinngemäss kann auch die Folie auf einer oder beiden Seiten mit einem Zugband 64 verstärkt sein, an dem über eine Vielzahl von Ösen 65 die ausgelegte Sperre verankert oder gezogen werden kann.

Ein Lagerbehälter 111, weist bevorzugt eine zylindrische Form auf und kann ein Abschnitt eines Kunststoffrohres sein und eine genügende Stabilität für den Transport und auch das Umladen zu gewährleisten, wie in den Figuren 7 und 8 dargestellt ist. Der zylindrische Teil kann aus weicherem Kunststoff sein. Allerdings sollten bleibende Deformationen am zylindrischen Teil vermieden werden. Die beiden Endseiten des Lagerbehälters 110 sind einerseits als negative (-) und anderseits als positive (+) Kupplungsstücke ausgebildet. Ganz wesentlich ist, dass das negative und das positive Kupplungsstück vollständig aufeinander abgestimmt sind, derart, dass jeder weitere Lagerbehälter mit seinem positiven und negativen Kupplungsstück zueinander passt, in Analogie zu beliebig verlängerbaren Schlauchleitungen, sei es für Wasser oder z.Bsp. in der Landwirtschaft für Flüssigmist. Grundsätzlich können die entsprechenden Kupplungsstücke ein- oder beidseitig an dem Lagerbehälter selbst oder aber an dem Doppelkammerrohr 112 ausgebildet sein. Sind die Kupplungsstücke nur mit dem Doppelkammerrohr 112 fest verbunden hat der Lagerbehälter nur noch eine Schutzfunktion für die Lagerung sowie den Transport. Zweckmässigerweise wird aber eine Kombination beider gewählt, wie in den Figuren 7 und 8 dargestellt ist. Dabei wird das Negativkupplungsstück als fester Bestandteil des Lagerbehälters 110 ausgebildet, und weist gleichzeitig die Eintrittsöffnungen sowohl für das flüssige Medium also z.Bsp. Wasser oder Oel wie für das gasförmige Medium, also Luft auf. Wie in der älteren Anmeldung WO 96/13638 ausführlich dargestellt ist, können beide Medien durch Zwangsfördermittel wie Pumpe und Gebläse eingebracht werden. Das flüssige Medium wird dabei durch das Ziehen des Behälters 110 z.Bsp. mit einem Seilzug 113 von selbst gefüllt. Das negative Kupplungsstück ist zu diesem Zweck als Füllkonus 114 ausgebildet, welcher bei Bedarf noch durch einen Zusatzkonus 114' erweitert werden kann. Der Füllkonus 114, ist durch ein Durchleitrohr 115 bis an die andere Endseite des Lagerbehälters 111 verlängert, so dass auf der vorderen Zugseite 116 das einströmende Wasser direkt auf die Ausstossseite 117 geleitet wird. Das gasförmige Medium wird im obenliegenden Teil über einen Füllstutzen 118, einen Verbindungsschlauch 119 von einem Gebläse 120 zugeführt, und ebenfalls über ein Luftrohr 121 bis zur Ausstossseite 117 geführt. Beide Medien treten erst am hinteren Ende, an der Ausstossseite 117 aus und in die zwei Kammern des Doppelkammerrohres 112, nämlich in die obere Luftkammer1 22 respektive in die untere Flüssigmediumkammer 123. Die Figur 8 zeigt oben den Beginn der Auslegung des Doppelkammerrohres, wofür das Gebläse 120 für die Luft eingeschaltet und ein Transportmittel z.Bsp. ein kleines Motorboot 125 gemäss Pfeil 124 vorwärts bewegt wird. Bei der Vorwärtsbewegung fängt der Füllkonus 114 genügend Wasser auf, so dass mit einem leichten Überdruck ein Rückstosseffekt entsteht, wie mit Pfeil 126 angedeutet ist. Die beiden Kammern, die Luftkammer 122 sowie die Flüssigmediumkammer 123 sind sackartig ausgebildet und weisen entsprechend einen geschlossenen Sackboden 127 auf. Bei dem beschriebenen Füllvorgang bleibt auch der Sackboden 127 am Ort, wo die Ausstossbewegung gestartet wurde, wie mit Pfeil 128 markiert ist. Beim Füllvorgang bleibt aber auch der bereits gefüllte Teil des Doppelkammerohres dort im Wasser liegen, wo die Füllmedien in den Doppelschlauch gefüllt werden. Dies hat eine ganze Anzahl grosser Vorteile. Die Auslegung beginnt an einem im voraus festlegbaren Ort (Pfeil 128). Das Sackende kann an der Stelle auf irgend eine Weise verankert werden, wie mit einem Ankerseil 129 nur angedeutet ist. Der viel wichtigere Vorteil ist aber der, dass auch bei grosser Geschwindigkeit des Füllvorganges oder bei variierender Geschwindigkeit des Füllvorganges keine Zugbelastung auf das Sackmaterial ausgeübt wird. Das Sackmaterial kann deshalb relativ dünn sein, mit bevorzugt weniger als 0,5 mm Wandstärke und trotzdem Doppelschlauchdurchmesser von 0,4, 0,6, 1,0 m oder mehr bilden. Das Sackmaterial liegt vor der Auslegung bevorzugt in sich selbst zusammengefaltet in dem Lagerbehälter und entfaltet sich genau in dem Tempo wie gefüllt wird, da sich das Sackmaterial auf der Ausstossseite frei aus dem Behälter austreten und die Form des gefüllten Doppelkammerrohres 112 annehmen kann. Die Figur 8 zeigt oben unmittelbar nach Beginn der Auslegung ein etwa gleich langes Teilstück L₁ des Doppelkammerrohres, wie die Länge des Containers 111. Für die Praxis werden Längen des Lagerbehälters von etwa 0,5 m bis 2,0 m bevorzugt. Die Länge des ausgelegten Doppelkammerrohres dagegen kann z.Bsp. von 5 m (oder weniger für Kanäle) bis zu 100 Meter oder mehr betragen. Optimale Verhältnisse Lagerbehälterlänge zu Doppelkammerrohrlänge können bei 1 : 5 bis 1 : 100 liegen. Die kleinere Verhältniszahl (etwa 1 : 5 bis 1 : 10) ist für spezielle Einsätze z.Bsp. bei Kanälen oder Flüssen jedoch mit grösseren Wandstärken des Doppelkammerrohrmateriales.

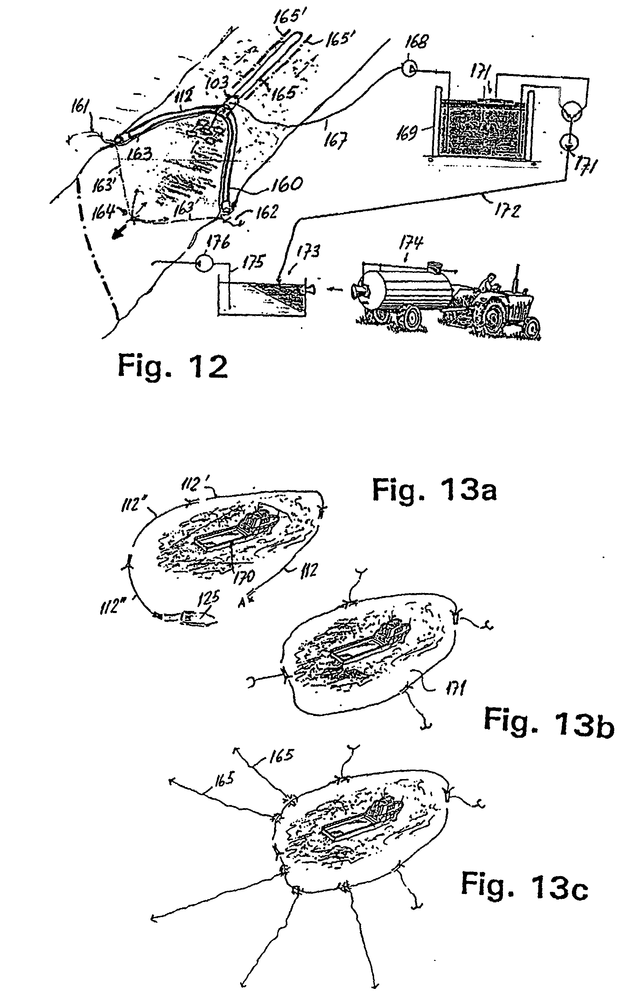

Die Figur 12 zeigt eine besonders interessante Applikation in einen Kanal bzw. Fluss, dabei ist eine Doppelschlauchdose 103 im Einsatz. Kanäle und Flüsse können Breiten von nur einigen Metern bis zu mehreren hundert Metern haben. Die neue Erfindung erlaubt nun, massgeschneidert eine Länge der Doppelkammerrohrleitungen 112, 112' vorzusehen, die örtlich optimal passen. Damit der Strömungswiderstand nicht unnötig vergrössert wird, kann der Schlauch V- oder U-förmig ausgelegt und auf beiden Uferseiten über Verankerungen 161, 162 genügend stark gesichert werden. Handelt es sich um einen Fluss mit einer relativ starken Strömung, empfiehlt sich ein Zugseil 163 oder Zugband über der ganzen Länge des Doppelkammerrohres vorzusehen. Damit kann auch die Position der Doppelschlauchdose 103 gesichert werden. Mit Punkt 164 soll markiert sein, dass die Doppelschlauchdose anfänglich an dieser Stelle gehalten oder zu dieser Stelle gezogen werden kann, um nach dem einen oder anderen Füllmodus die Doppelschläuche 112, 112' mit dem Medium zu füllen und anzulegen. Vorteilhafterweise wird in diesem Fall das Zugseil 163 (163') vorgängig am Ufer verankert. Sind die beiden Doppelkammerrohre mit beiden Medien gefüllt, kann die Doppelschlauchdose 3 flussabwärts abgelassen werden, bis das Zugseil 163 gespannt ist. Für die Art der Auslegung besteht natürlich eine grosse Freiheit. So kann, wie mit dicker, strichlierter Linie angedeutet ist, auch eine diagonale Auslegung eine Einzelmodules zum Einsatz kommen. Es können aber auch beliebig viele Module oder Kombinationen gewählt werden. Ein ganz besonders interessanter Aspekt liegt nun darin, dass der Doppelkammerschlauch nicht nur als Sperre sondern auch als Zwischenspeicher verwendbar ist. Entsprechend ist ein Speicherschlauch 165 direkt an die Doppelschlauchdose 103 angeschlossen. Stromaufwärts von der Doppelschlauchdose 103 befindet sich ein Skimmer 166, in dem das Wasser/Oelgemisch über die Doppetschlauchdose 103 in dem Speicherschlauch 165 gepumpt werden kann. Ist örtlich mit grösseren Auffangmengen zu rechnen, so können auch zwei oder mehrere Speicherschläuche 165, 165', 165" eingesetzt werden, so dass eine ununterbrochene Füllung und Leerung möglich ist. Das Oel/Wassergemisch wird aus dem Speicherschlauch 165 über eine Saugleitung 167 sowie eine Pumpe 168 in ein Setzbecken 169 geleitet. Von dem Setzbecken 169 wird die oben aufschwimmende Oelschicht über einen weiteren Skimmer 170 abgesogen und über eine Pumpe 171 sowie eine Schlauchleitung 172 in einen Oelabscheider 173 gefördert, von dem das konzentrierte Oel mit einem Tankfahrzeug 174 an eine Speicheranlage zurückgeführt werden kann. Das nahezu oelfreie Wasser geht über eine weitere Leitung 175 mit Pumpe 176 in den Kanal zurück.

Die Figur 13a und 13b zeigen das Anlegen einer Oelsperre um ein leckes Schiff 170. Mit einem Boot 125 wird an einer Stelle A mit dem Ausgeben der Doppelkammerrohre 112 begonnen, und diese nun dargestellte Sinne elementweise 112, 112', 112", 112"' usw. ausgelegt, bis die verschmutzte Fläche 171 eingekreist ist. Anschliessend kann sofort über Speicherschläuche 165, 165' usw. Oel/Wassergemisch zwischengespeichert werden. Auf dem Meer können die gefüllten Speicherschläuche nach Füllung zu einem nahestehenden Reinigungsschiff geführt werden. Die Figur 13c zeigt eine sternförmige Anordnung der Speicherschläuche 165, 165', 165" usw.

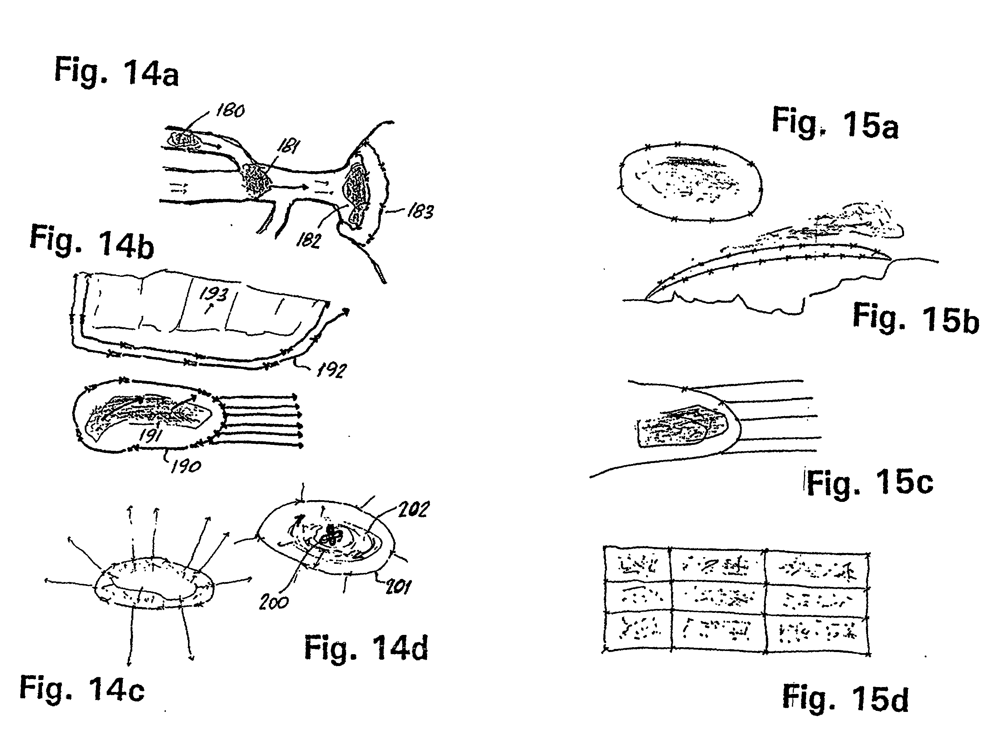

Die Figur 14a zeigt ein ganzes Dispositiv, wie bei einem grösseren Oelunfall Mehrfachsperren errichtet und gleichzeitig auch die Oelentfernung gelöst werden kann. Gezeigt ist eine erste Sperre 180 sowie eine zweite Sperre 181. Als letztes wird bei der Fliessungsmündung 182 ein drittes Sperrensystem 183 angebracht. Eine weitere Möglichkeit ist in Figur 14b gezeigt. Einerseits wird durch eine Sperre 190 ein Oelfleck 191 gefangen gehalten. Anderseits wird durch eine zweite Sperre 192 eine ganz besonders empfindliche Partie 193 der Küste oder des Ufers z.Bsp. eine Wasserentnahme, eine Fischzucht oder ein Badestrand geschützt. Die beiden Figuren 14c und 14d zeigen eine Möglichkeit wie durch ein Propellersystem 200 in eine mit einer Sperre 201 gefangen gehaltenen Oelfleck 202 dieser nach aussen getrieben und anschliessend in Speicherschläuche abgeführt wird.

Die Figuren 15a bis 15d zeigen schematisch vier Auslegekonzepte als Gegenüberstellung. Einkreisung eines Oelflecks, Uferschutz mit Doppelsperre, Sperren und Einfangen eines Oelflecks, schachbrettartige Auslegung eines Sperrensystems, wenn ein möglichst vollkommenes Auffangen und Abführen von Oel erreicht werden soll. Dabei kann Feld um Feld gereinigt werden.

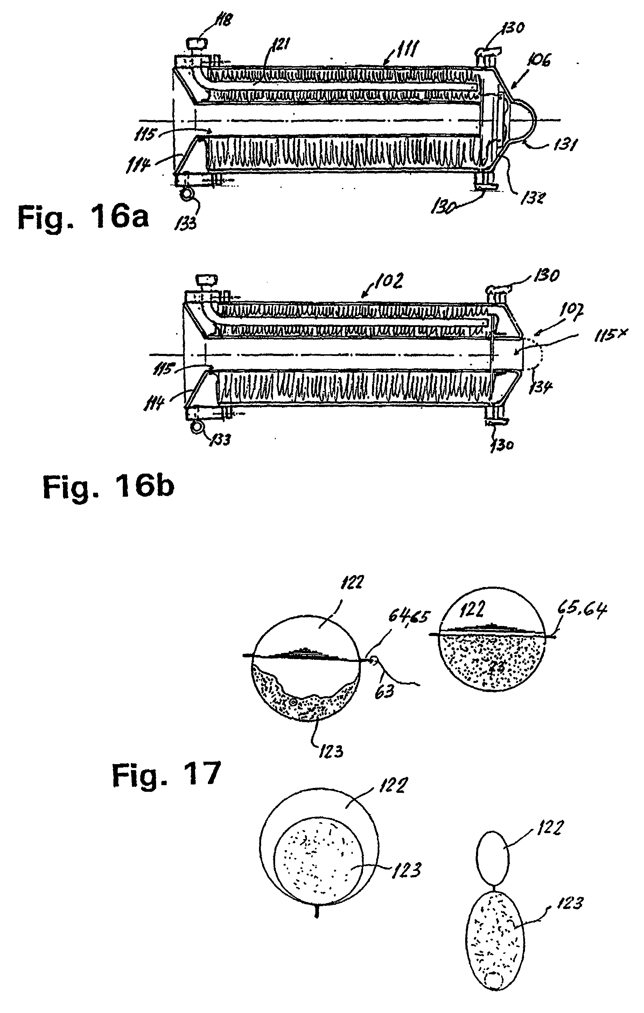

Die Figur 16a zeigt einen Behälter 111 in etwas grösserem Massstab, in dem Lagerzustand. Für eine Erleichterung des Kupplungsvorganges weist die Verschlusskupplung 106 eine Zentriernase 131 auf, welche mit etwas Spiel in das Innere des Durchleitrohres 115 passt. Kontaktiert die Zentriernase 131 den Füllkonus 114 des vorangehenden Behälters, so werden beim Aufbringen einer leichten Zusammenschiebekraft der beiden Behälter die entsprechenden zwei Kupplungsteile zentriert. Stösst in der Folge der Positivkonus 132 auf den Füllkonus 114 kann die Schnellspanneinrichtung 130 sofort betätigt und die beiden Körper kraftschlüssig verbunden werden. Die Anordnung der schnellspannbaren Klammern 130 kann irgendwo am Umfang sein, genau so der Füllstutzen 118 sowie Halteösen 133. Die jeweilige Lage muss einfach zweckmässig sein und die Kupplung wie auch den Füllvorgang unterstützen und nicht hemmen.

Die Figur 16b zeigt eine Serieschlauchdose, die mit Ausnahme des freien Wasserfüllweges sowie der Zentrierung. Der Hauptunterschied liegt darin, dass anstelle einer Verschlusskupplung 106 eine Durchgangskupplung 107 an einen sonst identischen Behälter angeklammert ist. Die Durchgangskupplung 107 weist ein dem Durchleitrohr 115 entsprechendes zentrales Durchgangsloch 115* auf. Das flüssige Medium kann somit auf der einen Seite eintreten und auf der anderen Seite wieder austreten. Das Durchgangsloch hat im Lagerzustand des Behälters bzw. Containers keine direkte Verbindung in das Innere der Flüssigkeitskammer 123. Diese Verbindung wird erst hergestellt, nachdem die Durchgangskupplung vom Lagerbehälter gelöst wurde und für die Auslegung eine Verbindung zu dem vorangehenden hergestellt ist. Strichliert ist in Figur 16b noch eine Verschlusskappe 134 eingezeichnet. Damit kann die Schlauchdose wahlweise als Einzetschlauchdose 101 oder als Serieschlauchdose 102 eingesetzt werden.

Die Figur 17 zeigt schematisch verschiedene Ausgestaltungen von Doppelkammerrohren. Ein wichtiger Punkt liegt darin, dass bei vielen Anwendungen eine kräftige Verankerung des Doppelkammerohres erforderlich ist. Hierzu wird vorgeschlagen einer Zugband 64 fest mit dem Doppelkammerrohr zu verbinden, an dem z.Bsp. über Oesen 64 ein Zugseil 63 auf der ganzen Doppelkammerrohrlänge verbindbar ist.

Die Vorrichtung gemäss der neuen Erfindung kann gemäss WO96/13638 so konzipiert werden, dass entsprechend für die Betriebsweise das folgende Verfahren möglich ist: Verfahren zum schnellen Auslegen einer biegungsfähigen Verunreinigungsschutzsperre, welche als Rohr zusammengefaltet bereit gehalten und in ausgelegtem Zustand doppelräumig, als asymmetrische, longitudinale und übereinanderliegende Kammern geteilt, einer oberen Kammer mit Gas bzw. Luft und einer unteren mit einem flüssigen Medium als Balast befüllbar ist, dadurch gekennzeichnet, dass
a) das Rohr einerseits mit einem geschlossenen Ende als Sackboden und anderseits mit einem offenen, verschliessbaren Ende für das flüssige Medium und mit einem Verschluss für die Gas- bzw. Luftbefüllung ausgebildet ist, mit neben- oder ineinanderliegenden Kammern bevorzugt in sich selbst, d.h. auf den eigenen biegungsfähigen Wänden zusammengefaltet, in einem Behälter befestigt bereitgehalten und die offene Seite des Rohres am einen Ende des Behälters ist,
b) die Füllung des biegungsfähigen Rohres auf Grund des Einlasses von gasförmigem und flüssigem Medium erfolgt, wobei das flexible Rohr in der Anfangsphase als Paket derart innerhalb des Behälters zusammengefaltet gelagert ist,
c) so dass der Sackboden als erster am Ende des Behälters (1) ausgestossen,
d) und die Flüssigkeitskammer infolge Schleppen des Behälters im Wasser mit dem flüssigen Medium d.h. Wasser befüllt, das Rohr als Verunreinigungsschutzsperre vollständig entfaltet, schnell ausgelegt und nach der vollständigen Entfaltung und Befüllung des biegungsfähigen Rohres mit den beiden Medien auf seiner offenen Seite verschlossen wird.

Das flüssige Medium kann je nach Verhältnis entweder über Flüssigkeitspumpen oder aber durch Befüllen infolge Schleppen in die untere Kammer eingebracht werden. Im zweiten Fall wird der Doppelschlauch am Ende sackbodenartig ausgebildet, oder aber die betreffende Seite durch ein Deckel verschlossen.

## Patentansprüche

1. Vorrichtung zum Auslegen von Schmutzstoffsperren im Wasser, nach dem Doppelkammerrohrprinzip, wobei die Doppelkammerrohre (112, 112', 112", 112"') als leichte, flexible Folienschläuche (4) ausgebildet, als tragbare Pakete bereitgehalten und für den Gebrauch in einer obenliegenden Kammer (122) mit Luft,und in einer untenliegenden Kammer (123) mit einem flüssigen Medium als Balast befüllbar sind,
**dadurch gekennzeichnet,**
**dass** die Folienschläuche (4) als Pakete in der Form von Modulen (1, 1^{x}, 1^{xx}), mit je endseitigen, formstabilen Kupplungsflanschen (2, 3) für die Errichtung einer längeren Sperre die Doppelkammerrohre (112, 112', 112", 112"') von mehreren Modulen über Schnellkupptungen (106, 107) verbindbar, und mit den beiden Medien während oder nach dem Auslegen befüllbar sind, wobei die Kupplungsflanschen (2, 3) etwa querschnittsgleich das ganze Doppelkammerrohr (112, 112') umfassen, und die Füllöffnung für das flüssige Medium grossquerschnittig, in Fortsetzung der entsprechenden Kammer in den Kupplungsflanschen (2, 3) ausgebildet ist.

2. Vorrichtung nach Anspruch 1,
**dadurch gekennzeichnet,**
**dass** jedes der Module (1, 1^{x}, 1^{xx}) in einem flexiblen oder formfesten Behälter (5, 9, 13) gelagert wird, und mit dem flüssigen Medium durch Schleppen oder Pumpen befüllbar ist.

3. Vorrichtung nach Anspruch 1 oder 2,
**dadurch gekennzeichnet,**
**dass** die formstabilen Kupplungsflanschen (2, 3) Füllöffnungen (11, 12) für die beiden Medien aufweisen.

4. Vorrichtung nach einem der Ansprüche 1 bis 3,
**dadurch gekennzeichnet,**
**dass** für die Luftführung in den Kupplungsflanschen (2, 3) ein Anschluss mit Rückschlagventil (30) radial nach aussen angeordnet ist.

5. Vorrichtung nach einem der Ansprüche 1 bis 4,
**dadurch gekenzeichnet,**
dass die Schnellkupplung (106, 107, 114) als Einfang-Zentriereinheit ausgebildet und, auf der Befüllseite des Doppelkammerrohres ein Einfangtrichter angeordnet ist, wobei sie bevorzugt Längskupplung-Schwimmboyen mit wenigstens auf zwei gegenüberliegenden Seiten zu den Doppelkammerrohreinheiten passende Schnellkupplungsstellen (106, 107) und das Doppelkammerrohr (112, 112', 112", 112"') besonders vorzugsweise auf der Ausstossseite für beide Medien einen verschlossenen Sackboden (127) aufweist, welcher mit einem, die entsprechenden Endseite des Behälters (110, 111, 111') verschliessenden Deckel (11, 15) fest verbunden ist, wobei der Deckel (14, 15) als Zentrierkegel passend als Kupptungsteil für einen Einfangtrichter (114) ausgebildet ist.

6. Vorrichtung nach einem der Ansprüche 1 bis 5,
**dadurch gekennzeichnet,**
**dass** sie an beiden Endseiten in dem Bereich der Kupplungsflanschen (2, 3) Spannstellen aufweist vorzugsweise für den Eingriff von Schnell-Spannhebeln, (130, 142, 143) welche entweder für die Sicherung des Kupplungsteils eines anschliessenden Kupplungsflansches (2, 3) oder eines Verschlussdeckels (14, 15) einsetzbar sind.

7. Vorrichtung nach einem der Ansprüche 1 bis 6,
**dadurch gekennzeichnet,**
**dass** das Doppelkammerrohr (112, 112') bevorzugt auf dessen Längsseite fest oder verschieblich angebracht Befestigungsstellen (65) für Zugmittel aufweist für die Querbewegen einer ausgelegten Sperre, wobei die Vorrichtung besonders vorzugsweise eine Seilführung oder Führungsschienen aufweist, für die Positionierung eines bereits im Wasser sich befindenden Behälters sowie eines nachfolgenden für dessen exakte Positionierung für eine Schnellkupplung der beiden Behälter (110, 111, 111').

8. Vorrichtung nach einem der Ansprüche 1 bis 7,
**dadurch gekennzeichnet,**
**dass** die als Kreuzungs- oder Weichenstellen ausgebildeten Schwimmboyen wenigstens drei, bevorzugt vier oder sechs Kupplungsanschlussstellen aufweist, wobei die nicht benötigten Anschlussstellen Verschlussdeckel aufweisen oder aber dass die Schwimmboyen innen im Sinne einer Rohrweiche verstellbare Überleitrohrstücke aufweist.

9. Vorrichtung nach einem der Ansprüche 1 bis 8,
**dadurch gekennzeichnet,**
**dass** die formstabilen Kupplungsflanschen (2, 3) mehrteilig ausgebildet sind und je einen Dicht- und Haltering (22, 23) für die Schlauchenden beider Kammern aufweisen.

10. Vorrichtung nach einem der Ansprüche 1 bis 9,
**dadurch gekennzeichnet,**
**dass** jeder Kupplungsflansch (2, 3) eine freie Durchtrittsöffnung für das flüssige Medium und wenigstens eine mit Ventilen absperrbare Öffnung für das gasförmige Medium aufweist.

11. Vorrichtung nach Anspruch 10,
**dadurch gekennzeichnet,**
**dass** bei einem Modul (1, 1^{x}, 1 ^{xx}) wenigstens der Flansch einer Endseite ein mit einem Rückschlagventil (30) absperrbaren und radial angeordneten Anschluss (11) für die Befüllung für das gasförmige Medium aufweist, dass jedoch bevorzugt beide Kupplungsflanschen Achsial-Absperrventile (40, 41) auf weisen, zur Sicherstellung eines erforderlichen Luftdruckes für das gasförmige Medium innerhalb mehrerer Module (1, 1^{x}, 1^{xx}).

12. Vorrichtung nach Anspruch 10 oder 11,
**dadurch gekennzeichnet,**
**dass** der Flansch auf einer Endseite in dem Bereich der Achsialabsperrventile (40, 41) eine Aufstossnocke (18) aufweist, so dass die jeweils angrenzenden Kammern für das gasförmige Medium von zwei Modulen (1, 1^{x}) nach der Zusammenkupplung durch die Offenstellung der Achsialabsperrventile (40, 41) einen gemeinsamen Druckraum bilden.

13. Bausatz, umfassend eine oder mehrere Vorrichtungen gemäss Anspruch 1, zum schnellen Auslegen von Sperren im Wasser, nach dem Doppelkammerrohrprinzip, welche paketartig als zusammengefaltete flexible Folienschtäuche (4) bereitgehalten und in der oben liegenden Kammer (122) mit Luft und in der untenliegenden Kammer (123) mit einem flüssigen Medium als Balast befüllbar sind,
**dadurch gekennzeichnet,**
**dass** er Schlauchmodule (1, 1^{x}, 1^{xx}) und Boyen aufweist, wobei die flexiblen Doppelkammerrohre (112, 112', 112") an ihren Endseiten formstabile Schnellkupplungsteile (106, 107, 114) aufweisen, passend zu Längskupplungsboyen und Kreuzkupptungsboyen zur Errichtung von Sperren In wählbarer Konstellation und/oder zum Einfangen von flüssigen Stoffen.

14. Bausatz nach Anspruch 13,
**dadurch gekennzeichnet,**
**dass** die Schnellkupplungsteile (106, 107, 114) als einheitliche Positiv- oder Negativkupplungsteile ausgebildet sind, zur beliebigen flächigen Zusammenstellung im Sinne eines Legospieles.

15. Verwendung der Vorrichtung nach Anspruch 1, als Auffanggsäcke für die Speicherung von Oelen, Schlämmen aber auch Meeresfrüchten oder Fischen.

## Claims

1. Apparatus for deployment of pollutant barriers in water, according to the duplicate-chamber-tube-principle, with which the duplicate-chamber-tubes, 112, 112 ', 112 ", 112 " ') are designed as easy, flexible-foil-tubes (4), provided for use as portable packages had already an above-lying chamber (122) with air, and a below-lying chamber (123), that may be filled with a liquid medium, characterised that the foil-hoses (4) are arranged as packages in the form of modules, (1, 1^{x}, 1^{xx}), having stable clutch-flanges (2, 3) located on each end of the tubes to build a long barrier with the duplicate-chamber-tubes (112, 112', 112", 112" ') by clutches for rapid fixation (106, 107) whereby the duplicate-chamber-tubes may be injected with the two media during or after deployment, having clutch-flanges (2, 3) that surround in a cross-section-like manner the whole duplicate-chamber-tube, 112, 112'), and the filling-port for the liquid medium that is designed in a bulk-cross-section manner in continuation of the corresponding chamber in the clutch-flanges (2, 3).

2. Apparatus according to claim 1, **characterised in that** each of the modules (1, 1^{x}, 1^{xx}), will be stored in a flexible or a solid case (5, 9, 13), and my be filled with the liquid medium by tow or by pumps.

3. Apparatus according to claim 1 or 2, **characterised in that** the solid clutch-flange (2, 3), shows filling-ports (11, 12) for both of the media.

4. Apparatus according to one of the claims 1 to 3, **characterised in that** the air will be guided through the clutch-flange through a port that contains a retention-valve (30).

5. Apparatus according to one of the claims 1 to 4, **characterised in that** the quickly-clutch (106, 107, 114) is designed as capture-centre-unit, that a funnel is located on the side of the duplicate-chamber-tubes, from where they will be filled, that preferably longitudinally like clutch-buoys will be located on at least two opposite sides of the duplicate-chamber-tube-units fast-clutches (106,107), the duplicate-chamber-tube (112,112',112",112 " ') has on that side, that is for both media, on the outer side, a closed sack-ground (127) that caps with covers (14, 15) the corresponding end-sides of the case (110, 111, 111' ) and that the cover is designed as a centre-cone-fange for the funnel (114).

6. Apparatus according to one of the claims 1 to 5, **characterised in that** on both end-sides in the area of that clutch-flanges (2, 3), workholding fixtures (130, 142, 143) are located, that are designed to be used preferably with a single-stroke-lever, either to attach the clutch-part of a subsequent clutch-flange (2, 3) or caps (14, 15).

7. Apparatus according to one of the claims 1 to 6, **characterised in that** the duplicate-chamber-tube (112, 112' ) shows preferably on his longside, attachment-fittings (65), mounted fix or movable, where fastener my be attached, to prevent crosswise movements of a already deployed barrier or to manoeuvre a already in water swimming container or his already in water swimming successor during deployment to position the clutches of the containers (110, 111, 111' ) for fastening, whereby the attachment-fitting may be preferably designed to guide a rope or a runner.

8. Apparatus according to one of the claims 1 to 7, **characterised in that** the buoys are designed to be crossings or points, that the buoys do have at least three, preferably four or six attachment-fittings, whereby the not used fittings are covered by a cap or that the buoy does have a lead-over-pipe like device, on his inner side.

9. Apparatus according to one of the claims 1 to 8, **characterised in that** the solid clutch-flanges (2, 3) are designed multi-sectional, containing each-one a sealing-ring and a holding-fixture-ring (22, 23).

10. Apparatus according to one of the claims 1 to 9, **characterised in that** each clutch-flange (2, 3) does have a free port for the liquid medium and at least one port with air-valves for the gaseous medium.

11. Apparatus according to claim 10, **characterised in that** in a module (1, 1^{x}, 1^{xx}), at least the flange of one of the end-side does have port equipped with a retention-valve (30), located radial, to be used to fill the gaseous medium **in, that** preferably both flanges do have axially-stop-valves (40, 41) to guaranty a necessary atmospheric pressure for the gaseous medium within several modules (1, 1^{x}, 1^{xx}).

12. Apparatus according to claim 10 or 11, **characterised in that** the flange shows an cam (18) on one of the end-side in the area of the stop-valves (40, 41), so that the chambers adjoining in each case for the gaseous medium of the two modules(1, 1^{x}, 1^{xx}) will form a common pressure-area, after the modules has been clutched together and the stop-valves has been opened.

13. Kit, including one or several appliances in accordance with claim 1, to deploy pollutant barriers in water according to the duplicate-chamber-tube-principle, that are designed as easy, flexible-foil-tubes (4), provided for use folded in portable packages and my be filled with air in the above-lying chamber and may be filled with a liquid medium as ballast, **characterised in that** it contains modules (1, 1^{x}, 1^{xx}) and buoys, whereby the flexible duplicate-chamber-tubes ( 112, 112 ', 112 ") do have at their. end-sides solid clutches (106, 107, 114), matching to long-side-buoys and cross-clutch-buoys to build barriers in any shape and to catch liquid mediums.

14. Kit according to claim 13, **characterised in that** the clutches (106, 107, 114) are designed as positively- or negative clutch-components to form be arranged in any shape like a LEGO game.

15. Use of the Apparatus according to claim 1, as tank for the storage of oils, sludge, but also seafood or fish.

## Revendications

1. Dispositif destiné au montage d'une barrières antipollution dans l'eau, suivant le principe des double chambre tuyau, à l'occasion des double chambre tuyaux (112, 112 ', 112", 112 "') sont constitutioné comme des tuyaux en feuille (4), disposé plié en paquets portatifs et si à l'utilisation les paquets ont une chambre en haut (122) avec de l'air, et à une chambre au-dessous (123), qui peut être rempli de milieu liquide pour servir comme ballast , caractérisait que les tuyaux en feuille (4) sont arrangés comme paquets sous forme de (1, 1^{x}, 1^{xx}), ayant les embrayage brides stables (2, 3) placé sur chaque extrémité des tubes pour établir une longue barrière avec des double chambre tuyaux (112, 112 ', 112", 112 "') par des embrayages pour la fixation rapide (106, 107) par lequel les double chambre tuyaux puissent être injectés avec les deux médias pendant ou après l'déploiement, ayant les embrayage brides (2, 3) qui entourent dans une façon croix section le double chambre tuyau (112,112 ') en entier, et le trou de remplir pour le milieu liquide qui est placé en façon d'un coupe transversale dans la suite de la chambre correspondante dans les embrayage brides (2, 3).

2. Dispositif destiné selon la revendication 1, **caractérisée en ce que** chacune des modules (1, 1^{x}, 1^{xx}), sera stocké dans un bac flexible dur (5, 9, 13), et peut être rempli avec du milieu liquide par remorquage ou par des pompes.

3. Dispositif destiné selon revendication 1 ou 2, **caractérisé en ce que** l'embrayage bride (2, 3), présente des remplir ouvertures (11, 12) pour tous les deux médias.

4. Dispositif destiné selon un des revendications 1 à 3, **caractérisé en ce que** l'air sera guidé par l'embrayage bride par un port qui contient valve contre la répercussion (30).

5. Dispositif destiné selon un des revendications 1 à 4, **caractérisé en ce que** le rapide embrayage (106, 107, 114) est conçu comme une capturer centre unité, qu'un cône est situé du côté des double chambre tuyau d'où ils seront remplis, que des bouée sont placé de deux côtés vis-à-vis des double chambre tuyau, près des embrayage (106.107) et que le double chambre tuyau (112,112',112",112 ''') comporte sur la côté de dégorge pour les deux médias une sac fermée (127) qui est connecter d'une façon fixe avec un correspondent des deux côte du couvertures (11, 15) du container, à l'occasion de le couverture (14, 15) est conçue comme un centre cône partie de embrayages pour le cône (114).

6. Dispositif destiné selon un des revendications 1 à 5, **caractérisé en ce que** sur les deux côtés vis-à-vis dans le secteur des embrayage brides (2, 3) il y a les tendeur rapide (130, 142, 143), qui sont conçues pour être utilise soit la consolidation l'embrayage partie d'une embrayage bride suivante (2, 3), soit une couverture (14, 15).

7. Dispositif destiné selon un des revendications 1 à 6, **caractérisé en ce que** le double chambre tuyau (112, 112 ') contient des places de attachement (65) pour des moyens de fixation, qui sont localisé préférablement long de la chambre tuyau en façon fixe ou mobile, pour parer au mouvements d'une barrière déjà déployée ou pour diriger un container suivante pendant le déploiement pour placer les embrayages des container (110, 111, 111') en précise position et qui puisse être de préférence conçu pour guider une corde ou un rampe.

8. Dispositif destiné des appareils selon un des revendications 1 à 7, **caractérisé en ce que** les bouées sont conçus pour être des croisements ou des flanc, que les bouées ont au moins trois, de préférence quatre ou six fixations, où les garnitures non utilisées soient couvertes par une couverture ou la bouée a un mener de tube de son côté intérieur

9. Dispositif destiné appareil selon un des revendications 1 à 8, **caractérisé en ce que** les embrayage brides (2, 3) sont multi sectionnes conçu, contenir chaque-un un boucle pour retenir e calfater (22, 23).

10. Dispositif destiné appareil selon un des revendications 1 à 9, **caractérisé en ce que** chaque embrayage bride (2, 3) a une ouverture pour le milieu liquide et au moins une ouverture avec un air valve pour le milieu gazeux

11. Dispositif destiné l'appareil selon la revendication 10, **caractérisée en ce que** dans un module (1, 1^{x}, 1^{xx}), au moins la bride d'une des côté vis-à-vis a une ouverture (11) équipé d'une valve contre la répercussion (30), radial localisé, pour remplir le milieu gazeux, que de préférence les deux brides ont les clapet valves (40, 41) pour garantir une pression atmosphérique nécessaire pour le milieu gazeux dans plusieurs modules (1, 1^{x}, 1^{xx}).

12. Dispositif destiné selon la revendication 10 ou 11, **caractérisé en ce que** la bride contient une came (18) sur une du côté termine dans le secteur des clapet (40, 41 ), de sorte que les chambres se touchant dans chaque point de droit pour le milieu gazeux des deux modules(1, 1^{x}) formeront un pression secteur commun, après que les modules ont été assembler et les clapet ont été ouvertes.

13. Kit compris un ou plusieurs dispositif selon la revendication 1, au montage d'une barrière antipollution dans l'eau selon le principe double chambre tuyau, qui sont constitutioné comme des tuyaux en feuille (4), disposé plié en paquets portatifs, que la chambre en haut (122) peut être gonfler avec du l'air et la chambre au-dessous (123) peut être rempli de milieu liquide comme ballast **caractérisé en ce qu'**il contient les modules (1, 1^{x}, 1^{xx}) et les bouées, par lequel les double chambre tuyau (112, 112', 112") aient à leurs embrayages (106, 107, 114), assortissant aux long côté bouées et aux croix embrayage bouées aux barrières de construction dans n'importe quelle forme et pour attraper des médias liquides.

14. Kit destiné selon la revendication 13, **caractérisée en ce que** les embrayages (106, 107, 114) sont conçus comme un positif ou négatif embrayage composants à former dans n'importe quelle forme une barrière du façon de LEGO.

15. utilisation destiné selon revendication 1, ayant la fonction du réservoir pour du stockage d'huiles, des cambouis, mais aussi pour des fruits de mer ou des poissons
